# EUROPEAN PATENT APPLICATION

(11) **EP 2 290 851 A2**
(43) Date of publication of application: **02.03.2011**
(21) Application number: 10171085.3
(22) Date of filing: 28.07.2010
(51) Int. Cl.: H04B 7/26

(54) **Relay method and relay apparatus**

(30) Priority: 01.09.2009 JP 2009201737
(71) Applicant: Fujitsu Limited, Kawasaki-shi, Kanagawa 211-8588 (JP)
(72) Inventor: Kawasaki, Toshio, Kawasaki-shi Kanagawa 211-8588 (JP)
(74) Representative: Fenlon, Christine Lesley

(57) **Abstract**

A wireless signal relay method comprises: receiving a wireless signal transmitted by mapping a first signal to be relayed (S1, S2) in a repetitive manner to a plurality of wireless resources (521 to 524); generating a combined signal by combining signals repetitively mapped as the first signal to be relayed; and transmitting the combined signal.

## Description

### CROSS-REFERENCE TO RELATED APPLICATIONS

### FIELD

The embodiments discussed herein are related to a wireless signal relay method and relay apparatus and also to a wireless communication apparatus, mobile station apparatus, and base station apparatus whose transmit signals are relayed using the relay method and relay apparatus.

### BACKGROUND

A method for relaying wireless communication between a base station apparatus and a mobile station apparatus by using a relay apparatus has been implemented in the field of wireless communication. One example of such a relay apparatus is a booster apparatus that does not perform signal regeneration.

In the prior art a communication relay apparatus that can enhance throughput by improving the error rate characteristics of a relay destination and can prevent a decrease in the throughput of the entire communication system by reducing interference power has been proposed. This communication relay apparatus receives a signal destined for a base station and performs processing such as decoding. Further, the signal is checked for a bit error, and if there is no bit error, the relay apparatus performs signal regeneration. If there is a bit error, the reception quality of each subcarrier is checked against a threshold value. If the reception quality is not less than the threshold value, the subcarrier is output, but if the reception quality is less than the threshold value, the subcarrier is not relayed to the destination. The signal processed in one or the other way is transmitted out.

A relay apparatus that relays without regeneration a signal transmitted from one wireless communication apparatus to another wireless communication apparatus in a wireless communication system constructed from a plurality of wireless communication apparatuses has also been proposed. This relay apparatus is used in a wireless communication system in which, when relaying a signal, a communication channel for relaying the signal is selected from among a plurality of communication channels. The relay apparatus includes a receiving unit which receives a relay frame that carries information concerning the communication channel used by the originating wireless communication apparatus, and a transmitting unit which transmits out the relay frame.

A data collection method wherein slave data collection time slots and relay station data collection time slots are provided within a data collection period, and wherein a master station transmits a data request signal at the beginning of the data collection period and a relay station transmits a data request signal by using a relay station data collection time slot has also been proposed. In this method, a slave station that received the data request signal transmits data by randomly selecting a slave data collection time slot. The master station transmits a response acknowledgement signal indicating the slave station from which the data was received. The relay station that received the data from the slave station deletes the data of the slave station indicated by the response acknowledgement signal and, using a relay station data collection time slot, transmits the data received from the slave station but not received yet by the master station.

Related art is disclosed in International Publication Pamphlet No. WO2006/118125, Japanese Laidopen Patent Publication No. 2008-79023 and Japanese Laidopen Patent Publication No. 6-334581.

### SUMMARY

Normally, the coverage area of a relay apparatus is smaller than the coverage area of a base station apparatus. It is therefore presumed that the number of mobile station apparatuses located within the coverage area of the relay apparatus is smaller than the number of mobile station apparatuses located within the coverage area of the base station apparatus. As a result, wireless resources may not be effectively utilized within the coverage area of the relay apparatus. For example, in the case of a communication system employing a time division multiple access scheme, unused time slots can occur, and in the case of a communication system employing a frequency division multiple access scheme, unused frequency resources can occur.

An object of the apparatus and method disclosed herein is to utilize wireless resources within the coverage area of a relay apparatus in order to enhance communication quality.

A wireless signal relay method according to one mode of the present invention includes:
receiving a wireless signal transmitted by mapping a first signal to be relayed in a repetitive manner to a plurality of wireless resources; generating a combined signal by combining signals repetitively mapped as the first signal to be relayed; and transmitting the combined signal.

A relay apparatus according to another mode of the present invention includes: a first receiving unit which receives a wireless signal; a combining unit which generates a combined signal by combining signals repetitively mapped as a first signal to be relayed to a plurality of wireless resources and received by the first receiving unit; and a first transmitting unit which transmits the combined signal.

### BRIEF DESCRIPTION OF THE DRAWING(S)

Figure 1 is a diagram illustrating the configuration of a first embodiment implemented in a wireless communication system;
Figure 2 is a diagram illustrating a first configuration example of a relay apparatus depicted in Figure 1;
Figure 3 is a diagram illustrating a first configuration example of a mobile station apparatus depicted in Figure 1;
Figure 4 is an explanatory diagram illustrating a relay process for a downlink signal;
Figure 5A is an explanatory diagram illustrating a first example of the downlink signal;
Figure 5B is an explanatory diagram illustrating a first example of the downlink signal;
Figure 6A is an explanatory diagram illustrating a second example of the downlink signal;
Figure 6B is an explanatory diagram illustrating a second example of the downlink signal;
Figure 7 is an explanatory diagram illustrating a relay process for an uplink signal;
Figure 8A is an explanatory diagram illustrating a first example of the uplink signal;
Figure 8B is an explanatory diagram illustrating a first example of the uplink signal;
Figure 9A is an explanatory diagram illustrating a second example of the uplink signal;
Figure 9B is an explanatory diagram illustrating a second example of the uplink signal;
Figure 10 is a diagram illustrating a configuration example of a base station apparatus depicted in Figure 1;
Figure 11 is a diagram illustrating a second configuration example of the relay apparatus depicted in Figure 1;
Figure 12 is a diagram illustrating a third configuration example of the relay apparatus depicted in Figure 1;
Figure 13 is a diagram illustrating a second configuration example of the mobile station apparatus depicted in Figure 1;
Figure 14 is a diagram illustrating a fourth configuration example of the relay apparatus depicted in Figure 1;
Figure 15A is a diagram illustrating a configuration example of a first mapper;
Figure 15B is a diagram illustrating a configuration example of a second mapper;
Figure 16 is a diagram illustrating a third configuration example of the mobile station apparatus depicted in Figure 1;
Figure 17 is a diagram illustrating the configuration of a second embodiment implemented in a wireless communication system;
Figure 18 is a diagram illustrating a first configuration example of the relay apparatus depicted in Figure 17;
Figure 19A is an explanatory diagram illustrating a third example of the downlink signal;
Figure 19B is an explanatory diagram illustrating a third example of the downlink signal;
Figure 19C is an explanatory diagram illustrating a third example of the downlink signal;
Figure 19D is an explanatory diagram illustrating a third example of the downlink signal;
Figure 20 is a diagram illustrating a first configuration example of the mobile station apparatus depicted in Figure 17;
Figure 21A is an explanatory diagram illustrating a third example of the uplink signal;
Figure 21B is an explanatory diagram illustrating a third example of the uplink signal;
Figure 21C is an explanatory diagram illustrating a third example of the uplink signal;
Figure 21D is an explanatory diagram illustrating a third example of the uplink signal;
Figure 22 is a diagram illustrating a second configuration example of the relay apparatus depicted in Figure 17;
Figure 23 is a diagram illustrating a second configuration example of the mobile station apparatus depicted in Figure 17;
Figure 24 is a diagram illustrating the configuration of a third embodiment implemented in a wireless communication system;
Figure 25 is a diagram illustrating a configuration example of the relay apparatus depicted in Figure 24;
Figure 26 is a diagram illustrating a configuration example of the mobile station apparatus depicted in Figure 24;
Figure 27 is a diagram illustrating a first configuration example of the base station apparatus depicted in Figure 24;
Figure 28A is an explanatory diagram illustrating a fourth example of the downlink signal;
Figure 28B is an explanatory diagram illustrating a fourth example of the downlink signal;
Figure 28C is an explanatory diagram illustrating a fourth example of the downlink signal;
Figure 29A is an explanatory diagram illustrating a fourth example of the downlink signal;
Figure 29B is an explanatory diagram illustrating a fourth example of the downlink signal;
Figure 29C is an explanatory diagram illustrating a fourth example of the downlink signal;
Figure 30 is a diagram illustrating a configuration example of an identification information appending unit;
Figure 31 is a diagram illustrating a first configuration example of a relay identifying unit;
Figure 32 is a diagram illustrating a second configuration example of the base station apparatus depicted in Figure 24;
Figure 33 is a diagram illustrating a second configuration example of the relay identifying unit;
Figure 34 is a diagram illustrating the configuration of a fourth embodiment implemented in a wireless communication system; and
Figure 35 is an explanatory diagram illustrating a scheduling process performed at the base station apparatus depicted in Figure 34;

### DESCRIPTION OF EMBODIMENT(S)

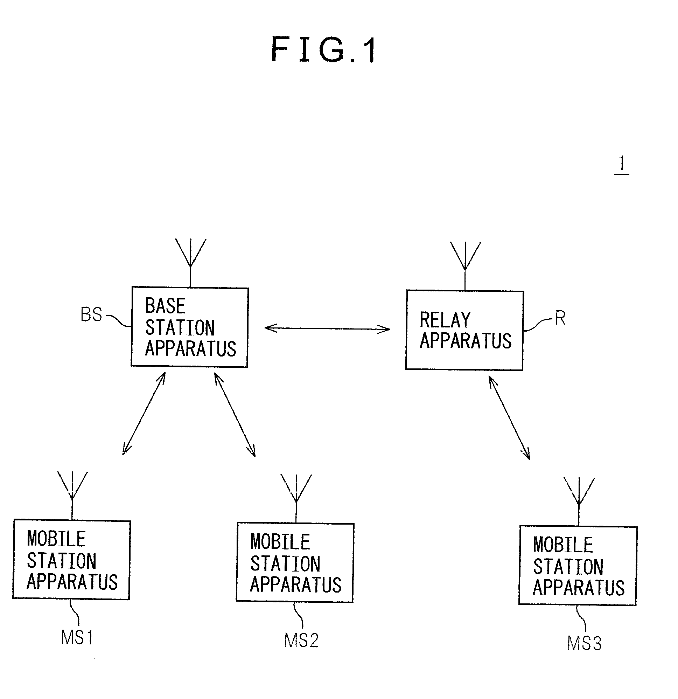

Embodiment of the present invention will be described below with reference to the accompanying drawings. Figure 1 is a diagram illustrating the configuration of a first embodiment implemented in a wireless communication system. Reference numeral 1 indicates the wireless communication system, BS designates a base station apparatus, MS1 to MS3 designate mobile station apparatuses, and R designates a relay apparatus. The wireless communication system 1 thus includes the base station apparatus BS, the mobile station apparatuses MS1 to MS3, and the relay apparatus R. The mobile station apparatuses MS1 to MS3 may hereinafter be collectively designated as the mobile station apparatus MS.

The relay apparatus R relays wireless communication between the base station apparatus BS and the mobile station apparatus MS. For example, the relay apparatus R is used to expand the coverage area so as to cover a dead zone created within the cell served by the base station apparatus BS. The relay apparatus R may be, for example, a booster apparatus that does not perform signal regeneration. In the present embodiment, it is assumed that the mobile station apparatus MS3 is served by the relay apparatus R.

The number of mobile station apparatuses MS located within the coverage area of the relay apparatus R is smaller than the number of mobile station apparatuses MS located within the coverage area of the base station apparatus BS. As a result, in the case of a prior art relay apparatus, unused frequency resources or time slots can occur within its coverage area, resulting in a degradation of utilization of the wireless resources.

For example, in the case of a downlink signal, the relay apparatus simply amplifies the wireless signal received from the base station apparatus and transmits it out on the outgoing link. As a result, even when the wireless signal is destined for a mobile station apparatus located outside the coverage area of the relay apparatus, the relay apparatus relays the wireless signal within the coverage area. On the other hand, in the case of an uplink signal, for example, since the wireless resources assigned to mobile station apparatuses located outside the coverage area of the relay apparatus are not used, there occur wireless resources not used within the coverage area of the relay apparatus R.

In the present embodiment, the wireless resources used within the coverage area of the relay apparatus R are utilized to enhance communication quality. For this purpose, within the coverage area of the relay apparatus R, in the case of a downlink transmit signal the relay apparatus R transmits the signal to the designated mobile station apparatus by mapping the same signal to be transmitted to a plurality of wireless resources in a repetitive manner. In this case, the mobile station apparatus combines the signals repetitively mapped to the plurality of wireless resources. On the other hand, within the coverage area of the relay apparatus R, in the case of an uplink transmit signal the mobile station apparatus transmits the signal to the relay apparatus R by mapping the same transmit signal to a plurality of wireless resources in a repetitive manner. In this case, the relay apparatus R combines the signals repetitively mapped to the plurality of wireless resources.

For example, suppose that the same signal is mapped to the plurality of wireless resources repetitively a number "n" of times. Then, if it is assumed that the propagation path characteristics are the same for the plurality of wireless resources, it is expected that the strength of the amplitude of the combined signal component increases by a factor of "n", while the strength of the amplitude of the noise component increases by a factor of "√n". The present embodiment thus improves the quality of communication between the relay apparatus R and the mobile station apparatus MS.

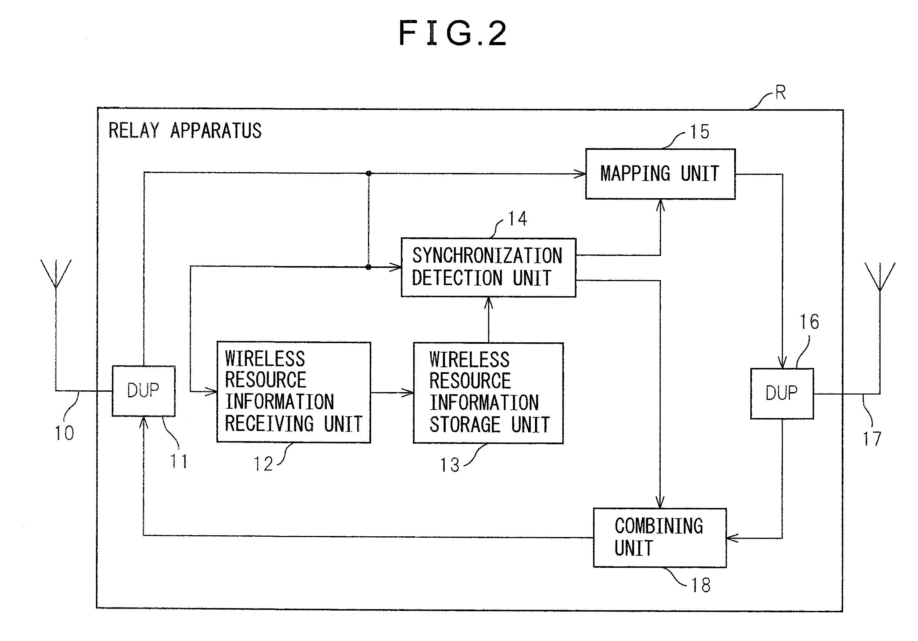

Figure 2 is a diagram illustrating a first configuration example of the relay apparatus R depicted in Figure 1. Reference numerals 10 and 17 are antennas, 11 and 16 are antenna duplexers (DUPs), 12 is a wireless resource information receiving unit, and 13 is a wireless resource information storage unit. Further, reference numeral 14 is a synchronization detection unit, 15 is a mapping unit, and 18 is a combining unit.

The relay apparatus R thus includes the antennas 10 and 17, the antenna duplexers 11 and 16, the wireless resource information receiving unit 12, the wireless resource information storage unit 13, the synchronization detection unit 14, the mapping unit 15, and the combining unit 18.

The antenna 10 is an antenna for receiving a signal to be relayed, from the base station apparatus BS, and for transmitting a signal to be relayed to the base station apparatus BS. The signal to be relayed by the relay apparatus R may hereinafter be designated as a relay signal. The signal received by the antenna 10 is transferred via the antenna duplexer 11 into the receiver unit within the relay apparatus R. The antenna 10 and the antenna duplexer 11 here are given as one example of the second receiving unit described in the appended claims. The signal received by the antenna 10 is supplied to the wireless resource information receiving unit 12, the synchronization detection unit 14, and the mapping unit 15.

The wireless resource information receiving unit 12 receives wireless resource information transmitted from the base station apparatus BS. The wireless resource information includes information for specifying the plurality of wireless resources to which the signal to be transmitted to the mobile station apparatus M3 is to be mapped in a repetitive manner in the wireless communication between the relay apparatus R and the mobile station apparatus M3 served by the relay apparatus R, and information for specifying the plurality of wireless resources to which the signal to be transmitted from the mobile station apparatus M3 is to be mapped in a repetitive manner. The wireless resource information received by the wireless resource information receiving unit 12 is stored in the wireless resource information storage unit 13.

The synchronization detection unit 14, based on the signal received from the base station apparatus BS, establishes synchronization with the base station apparatus BS and generates a timing signal that indicates the timing for processing the signal to be relayed. For example, the synchronization detection unit 14 may establish synchronization with the base station apparatus BS by using a pilot signal transmitted from the base station apparatus BS. In accordance with the timing signal generated by the synchronization detection unit 14, the mapping unit 15 maps the signal to be relayed to the mobile station apparatus M3 in a repetitive manner to the plurality of wireless resources specified by the wireless resource information stored in the wireless resource information storage unit 13.

The antenna 17 is an antenna for receiving a relay signal from the mobile station apparatus M3 located within the coverage area of the relay apparatus R, and for transmitting a relay signal to the mobile station apparatus M3. The relay signal mapped to the plurality of wireless resources is processed by the signal processing circuit within the relay apparatus R, and is output via the antenna duplexer 16 to the antenna 17 for transmission. The antenna 17 and the antenna duplexer 16 here are given as one example of the second receiving unit described in the appended claims.

The signal transmitted from the mobile station apparatus M3 and received by the antenna 17 is transferred via the antenna duplexer 16 into the receiver unit within the relay apparatus R. The antenna 17 and the antenna duplexer 16 here are given as one example of the first receiving unit described in the appended claims. The signal received by the antenna 17 is supplied to the combining unit 18.

In accordance with the wireless resource information stored in the wireless resource information storage unit 13 and the timing signal generated by the synchronization detection unit 14, the combining unit 18 combines the signals on the plurality of wireless resources to which the uplink signal transmitted from the mobile station apparatus MS3 is mapped in a repetitive manner. More specifically, the combining unit 18 sums the signals mapped to the plurality of wireless resources.

The combined signal from the combining unit 18 is processed by the signal processing circuit within the relay apparatus R, and is output via the antenna duplexer 11 to the antenna 10 for transmission. The antenna 10 and the antenna duplexer 11 here are given as one example of the first receiving unit described in the appended claims.

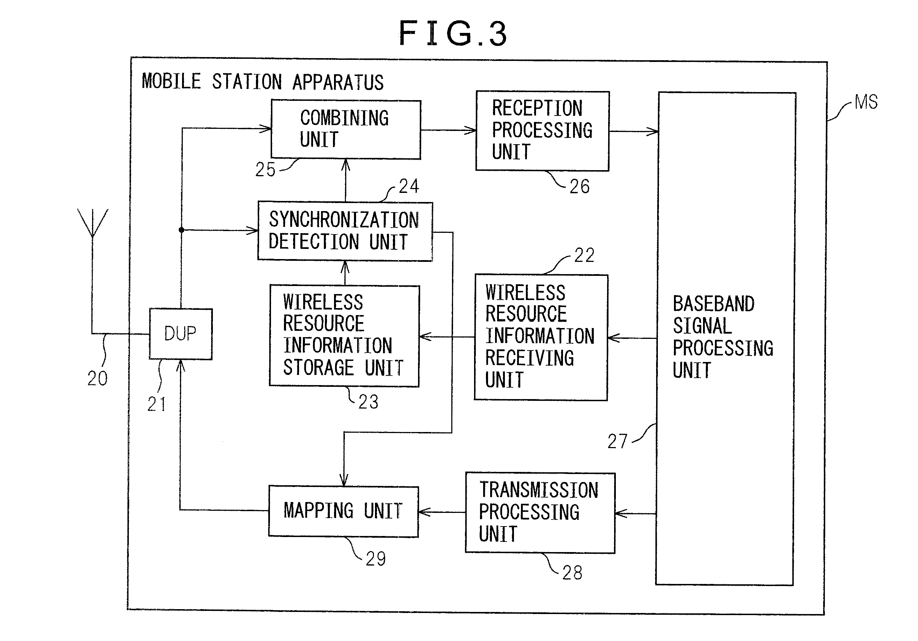

Figure 3 is a diagram illustrating a first configuration example of the mobile station apparatus MS depicted in Figure 1. Reference numeral 20 is an antenna, 21 is an antenna duplexer, 22 is a wireless resource information receiving unit, 23 is a wireless resource information storage unit, and 24 is a synchronization detection unit. Further, reference numeral 25 is a combining unit, 26 is a reception processing unit, 27 is a baseband signal processing unit, 28 is a transmission processing unit, and 29 is a mapping unit.

The mobile station apparatus MS thus includes the antenna 20, the antenna duplexer 21, the wireless resource information receiving unit 22, the wireless resource information storage unit 23, and the synchronization detection unit 24. The mobile station apparatus MS further includes the combining unit 25, the reception processing unit 26, the baseband signal processing unit 27, the transmission processing unit 28, and the mapping unit 29.

The antenna 20 is an antenna for receiving a downlink signal from the base station apparatus BS, and for transmitting an uplink signal to the base station apparatus BS. The antenna 20 and the antenna duplexer 21 are given as one example of the third receiving unit and third transmitting unit described in the appended claims. The signal received by the antenna 20 is transferred via the antenna duplexer 21 into the receiver unit within the mobile station apparatus MS. The signal received by the antenna 20 is supplied to the combining unit 25 and the synchronization detection unit 24.

The wireless resource information receiving unit 22 takes as input from the baseband signal processing unit 27 the wireless resource information transmitted from the base station apparatus BS and demodulated and decoded by the reception processing unit 26 to be described later. The wireless resource information received by the wireless resource information receiving unit 22 is stored in the wireless resource information storage unit 23.

The synchronization detection unit 24, based on the signal received from the base station apparatus BS, establishes synchronization with the base station apparatus BS and generates a timing signal that indicates the timing for processing the signal to be relayed. For example, the synchronization detection unit 24 may establish synchronization with the base station apparatus BS by using a pilot signal transmitted from the base station apparatus BS. In accordance with the wireless resource information stored in the wireless resource information storage unit 23 and the timing signal generated by the synchronization detection unit 24, the combining unit 25 combines the signals on the plurality of wireless resources to which the downlink signal relayed from the relay apparatus R is mapped in a repetitive manner. More specifically, the combining unit 25 sums the signals mapped to the plurality of wireless resources.

The reception processing unit 26 demodulates and decodes the downlink signal output from the combining unit 25. The baseband signal processing unit 27 performs baseband signal processing for the user data and control information transferred between the base station apparatus BS and the mobile station apparatus MS.

The transmission processing unit 28 encodes and modulates the uplink signal to be transmitted from the mobile station apparatus MS to the base station apparatus BS. In accordance with the timing signal generated by the synchronization detection unit 24, the mapping unit 29 maps the uplink signal in a repetitive manner to the plurality of wireless resources specified by the wireless resource information stored in the wireless resource information storage unit 23. The uplink signal mapped to the plurality of wireless resources is output onto the antenna 20 via the antenna duplexer 21 and transmitted out from the mobile station apparatus MS.

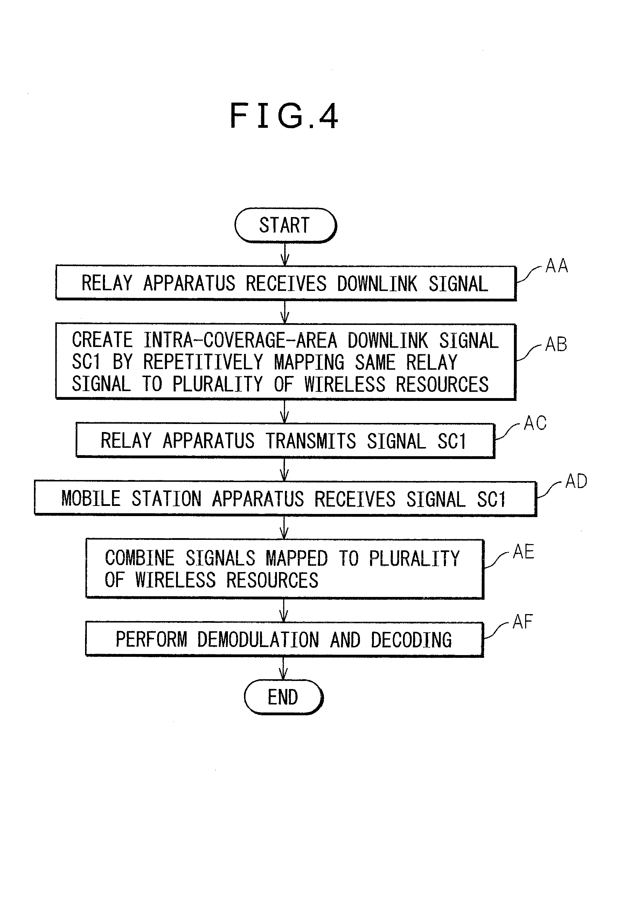

Next, the relay process performed by the relay apparatus R will be described. Figure 4 is an explanatory diagram illustrating the relay process for the downlink signal. In an alternative embodiment, the following operations AA to AF may be implemented as steps. In operation AA, the relay apparatus R receives the downlink signal transmitted from the base station apparatus BS.

In operation AB, the mapping unit 15 creates a signal SC1 for transmission within the coverage area by mapping the downlink signal destined for the mobile station apparatus MS3 in a repetitive manner to the plurality of wireless resources specified by the wireless resource information received from the base station apparatus BS. The signal created by mapping the downlink signal to the plurality of wireless resources in a repetitively manner may hereinafter be referred to as the "intra-coverage-area downlink signal."

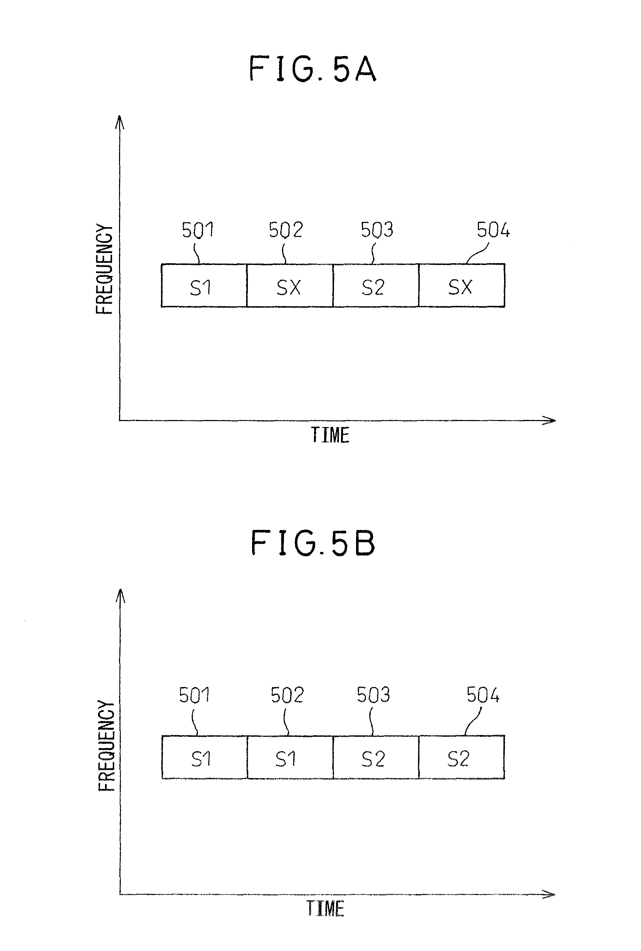

In operation AC, the relay apparatus R transmits the intra-coverage-area downlink signal SC1 within the coverage area. Figure 5A depicts a first example of the downlink signal outside the coverage area of the relay apparatus R. The downlink signal is multiplexed by using a time division multiple access technique, and reference numerals 501 to 504 indicate four successive time slots. The time slots 501 and 503 are assigned to the downlink signals S1 and S2 destined for the mobile station apparatus MS3 served by the relay apparatus R. On the other hand, the time slots 502 and 504 are assigned to mobile station apparatus not served by the relay apparatus R.

Figure 5B depicts an example of the downlink signal within the coverage area of the relay apparatus R. In this example, the wireless resource information specifies the original time slot to which the downlink signal was mapped in the communication between the base station apparatus BS and the mobile station apparatus MS3 and its immediately succeeding time slot as the plurality of wireless resources to which the downlink signal is to be mapped in a repetitive manner. As a result, the downlink signal S1 transmitted in the time slot 501 in Figure 5A is mapped by the mapping unit 15 in the relay apparatus R to the time slot 501 and its immediately succeeding time slot 502 in a repetitive manner. Likewise, the downlink signal, 32 transmitted in the time slot 503 in Figure 5A is mapped to the time slot 503 and its immediately succeeding time slot 504 in a repetitive manner.

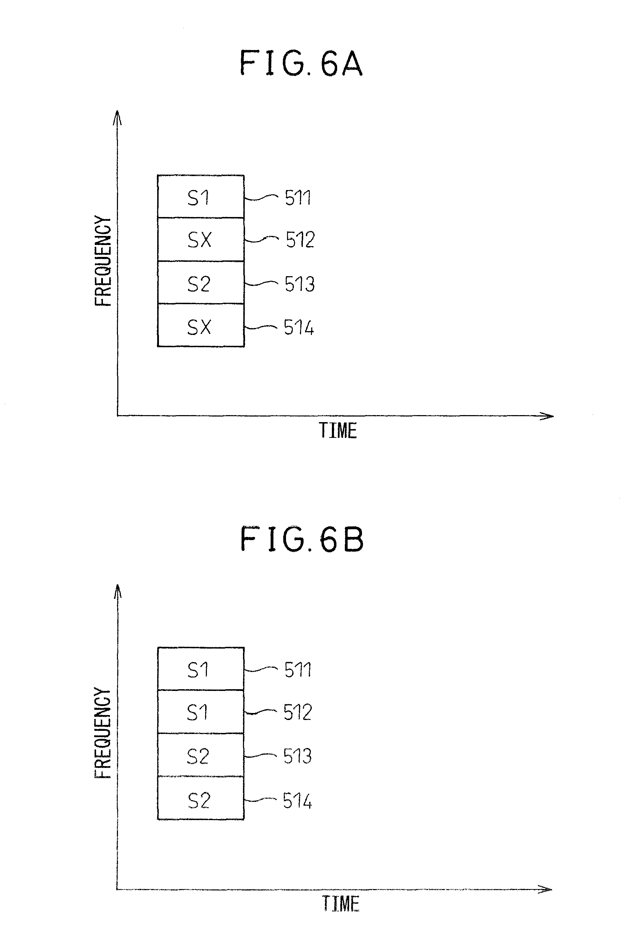

Figure 6A depicts a second example of the downlink signal outside the coverage area of the relay apparatus R. The downlink, signal is multiplexed, by using a frequency division multiple access technique, and reference numerals 511 to 514 indicate four successive frequency resources, i.e., frequency bands. The frequency bands 511 and 513 are assigned to the downlink signals S1 and S2 destined for the mobile station apparatus MS3. On the other hand, the frequency bands 512 and 514 are assigned to mobile station apparatus not served by the relay apparatus R.

Figure 6B depicts an example of the downlink signal within the coverage area of the relay apparatus R. In this example, the wireless resource information specifies the original frequency band to which the downlink signal was mapped in the communication between the base station apparatus BS and the mobile station apparatus MS3 and its adjacent frequency band as the plurality of wireless resources to which the downlink signal is to be mapped in a repetitive manner. As a result, the downlink signal S1 transmitted in the frequency band 511 in Figure 6A is mapped by the mapping unit 15 in the relay apparatus R to the frequency band 511 and its adjacent frequency band 512 in a repetitive manner. Likewise, the downlink signal S2 transmitted in the frequency band 513 in Figure 6A is mapped to the frequency band 513 and its adjacent frequency band 514 in a repetitive manner.

Reference is made to Figure 4. In operation AD, the mobile station apparatus MS3 receives the intra-coverage-area downlink signal SC1. In operation AE, the combining unit 25 in the mobile station apparatus MS3 sums the downlink signals mapped to the plurality of wireless resources assigned to the intra-coverage-area downlink signal SC1.

For example, in the example of the intra-coverage-area downlink signal depicted, in Figure 5B, the combining unit 25 sums the downlink signals mapped to the time slots 501 and 502. Further, the combining unit 25 sums the downlink signals mapped to the time slots 503 and 504. On the other hand, in the example of the intra-coverage-area downlink signal depicted in Figure 6B, the combining unit 25 sums the downlink signals mapped to the frequency bands 511 and 512. Further, the combining unit 25 sums the downlink signals mapped to the frequency bands 513 and 514. In operation AF, the reception processing unit 26 demodulates and decodes the downlink signal output from the combining unit 25.

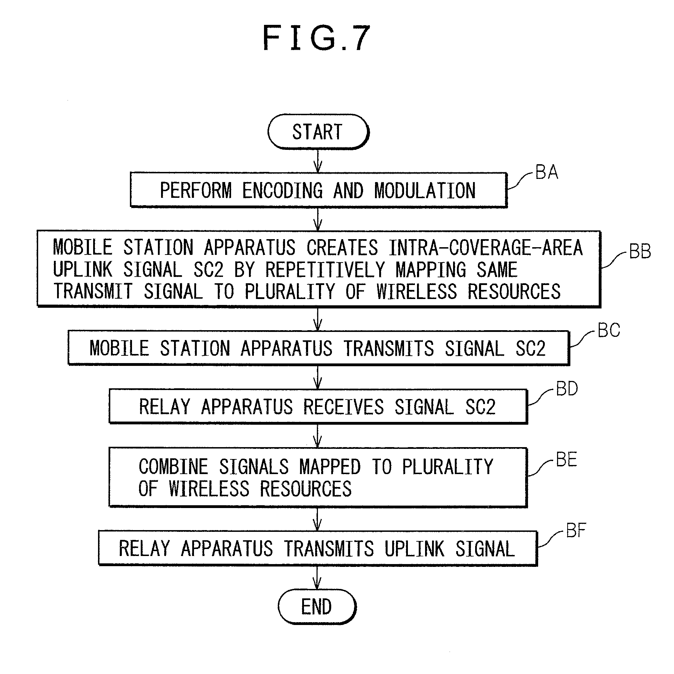

Figure 7 is an explanatory diagram illustrating the relay process for the uplink signal. In an alternative embodiment, the following operations BA to BF may be implemented as steps. In operation BA, the transmission processing unit 28 in the mobile station apparatus MS3 encodes and modulates the uplink signal to be transmitted from the mobile station apparatus MS3 to the base station apparatus BS.

In operation BB, the mapping unit 29 creates a signal SC2 for transmission within the coverage area of the relay apparatus R by mapping the uplink signal in a repetitive manner to the plurality of wireless resources specified by the wireless resource information received from the base station apparatus BS. The signal created by mapping the uplink signal to the plurality of wireless resources in a repetitive manner may hereinafter be referred to as the "intra-coverage-area uplink signal."

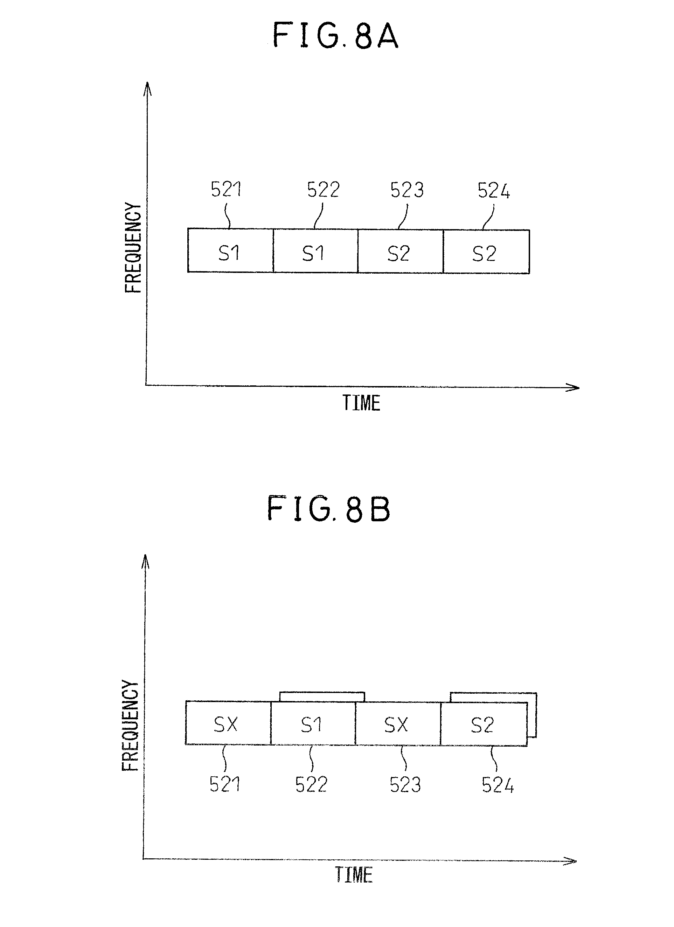

In operation BC, the mobile station apparatus MS3 transmits the intra-coverage-area uplink signal SC2. Figure 8A depicts a first example of the uplink signal within the coverage area of the relay apparatus R. The uplink signal is multiplexed by using a time division multiple access technique, and reference numerals 521 to 524 indicate four successive time slots.

In this example, the wireless resource information specifies the original time slot to which the uplink signal was mapped in the communication between the base station apparatus BS and the mobile station apparatus MS3 and its immediately preceding time slot as the plurality of wireless resources to which the uplink signal is to be mapped in a repetitive manner. As a result, the uplink signal S1 is mapped to the two successive time slots 521 and 522, and the uplink signal S2 is mapped to the two successive time slots 523 and 524.

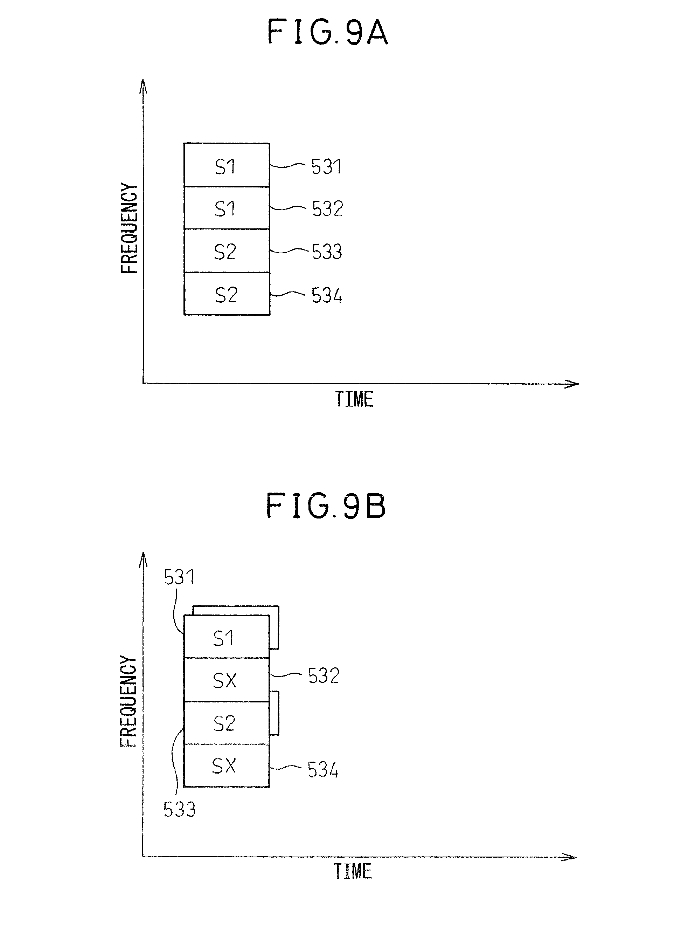

Figure 9A depicts a second example of the uplink signal within the coverage area of the relay apparatus R. The uplink signal is multiplexed by using a frequency division multiple access technique, and reference numerals 531 to 534 indicate four successive frequency bands. In this example, the wireless resource information specifies the original frequency band to which the uplink signal was mapped in the communication between the base station apparatus BS and the mobile station apparatus MS3 and its adjacent frequency band as the plurality of wireless resources to which the uplink signal is to be mapped in a repetitive manner. As a result, the uplink signal S1 is mapped to the two adjacent frequency bands 531 and 532, and the uplink signal S2 is mapped to the two successive frequency bands 533 and 534.

Reference is made to Figure 7. In operation BD, the relay apparatus R receives the intra-coverage-area uplink signal SC2. In operation BE, the combining unit 18 in the relay apparatus R sums the uplink signals mapped to the plurality of wireless resources assigned to the intra-coverage-area uplink signal SC2.

For example, in the example of the intra-coverage-area uplink signal depicted in Figure 8A, the combining unit 18 sums the uplink signals mapped to the time slots 521 and 522. Further, the combining unit 18 sums the uplink signals mapped to the time slots 523 and 524. On the other hand, in the example of the intra-coverage-area uplink signal depicted in Figure 9A, the combining unit 18 sums the uplink signals mapped to the frequency bands 531 and 532. Further, the combining unit 18 sums the uplink signals mapped to the frequency bands 533 and 534.

Reference is made to Figure 7. In operation BF, the relay apparatus R transmits out the uplink signal which contains the signal output from the combining unit 18. Figure 8B depicts an example of the uplink signal outside the coverage area of the relay apparatus R when the uplink signal depicted in Figure 8A is relayed. The signal S1 obtained by combining the uplink signals received in the time slots 521 and 522 in a repetitive manner from the mobile station apparatus MS3 is mapped to the time slot 522.

Likewise, the signal S2 obtained by combining the uplink signals received in the time slots 523 and 524 in a repetitive manner from the mobile station apparatus MS3 is mapped to the time slot 524. The time slots 521 and 523 are assigned to mobile station apparatus not served by the relay apparatus R.

Figure 9B depicts an example of the uplink signal outside the coverage area of the relay apparatus R when the uplink signal depicted in Figure 9A is relayed. The signal S1 obtained by combining the uplink signals received in the frequency bands 531 and 532 in a repetitive manner from the mobile station apparatus MS3 is mapped to the frequency band 531. Likewise, the signal S2 obtained by combining the uplink signals received in the frequency bands 533 and 534 in a repetitive manner from the mobile station apparatus MS3 is mapped to the frequency band 533.

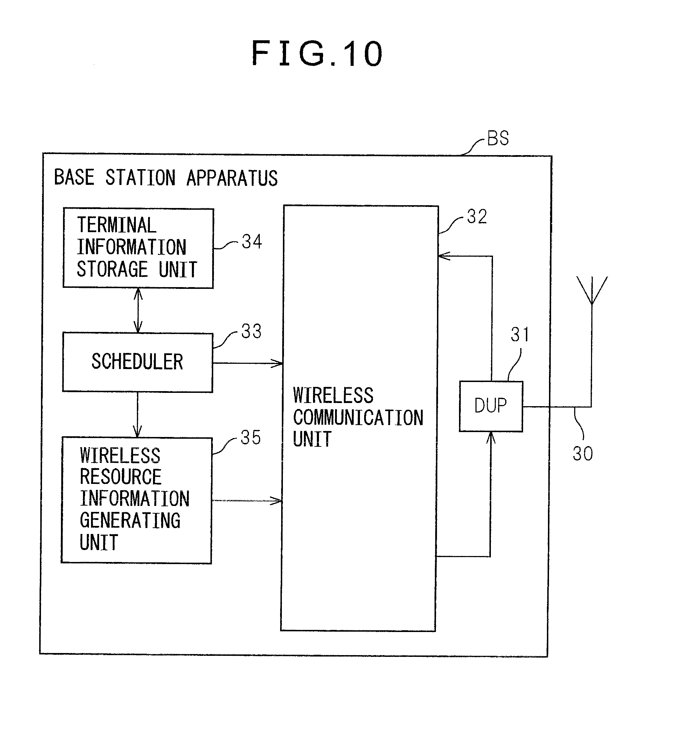

Next, one example of a wireless resource information setting method will be described. Figure 10 is a diagram illustrating a configuration example of the base station apparatus BS depicted in Figure 1. Reference numeral 30 is an antenna, 31 is an antenna duplexer, 32 is a wireless communication unit, 33 is a scheduler, 34 is a terminal information storage unit, and 35 is a wireless resource information generating unit.

The base station apparatus BS thus includes the antenna 30, the antenna duplexer 31, the wireless communication unit 32, the scheduler 33, the terminal 1 information storage unit 34, and the wireless resource information generating unit 35. The antenna 30 is an antenna for transmitting a wireless signal to the mobile station apparatus MS, and for receiving a wireless signal from the mobile station apparatus MS. The wireless signal received by the antenna 30 is supplied via the antenna duplexer 31 to the wireless communication unit 32, and the wireless frequency signal output from the wireless communication unit 32 is supplied via the antenna duplexer 31 to the antenna 30 and transmitted out as a wireless signal.

The wireless communication unit 32 performs processing for the reception and transmission of the user data and control information transferred between the mobile station apparatus MS and the base station apparatus BS. The scheduler performs processing for the assignment of wireless resources and the determination of the transmission format for the communication performed between the mobile station apparatus MS and the base station apparatus BS.

The terminal information storage unit 34 stores information about the mobile station apparatus MS that is currently connected to the base station apparatus BS and for which the wireless resources used for the wireless communication with the base station apparatus BS are determined by the scheduler 33. The terminal information storage unit 34 further stores information identifying whether any one of the currently connected mobile station apparatus MS is to be served by the relay apparatus R.

The scheduler 33 determines, for each mobile station apparatus MS to be served by the relay apparatus R, the plurality of wireless resources to which the downlink signal is to be mapped in a repetitive manner within the coverage area of the relay apparatus P. Further, the scheduler 33 determines, for each mobile station apparatus MS to be served by the relay apparatus R, the plurality of wireless resources to which the uplink signal is to be mapped in a repetitive manner within the coverage area of the relay apparatus R.

The wireless resource information generating unit 35 generates wireless resource information that specifies the plurality of wireless resources determined by the scheduler 33 as the wireless resources to which the downlink or the uplink signal is to be mapped in a repetitive manner within the coverage area of the relay apparatus R. The wireless communication unit 32 transmits the wireless resource information to the mobile station apparatus MS together with the scheduling information indicating the transmission format and the wireless resources assigned to the mobile station apparatus MS. The wireless communication unit 32 also transmits the wireless resource information to the relay apparatus R.

The scheduler 33 may determine the wireless resources to be assigned to the plurality of mobile station apparatus MS, in such a manner that the downlink or the uplink signal can be mapped in a repetitive manner to a plurality of temporally or spatially succeeding wireless resources within the coverage area of the relay apparatus R. For this purpose, the scheduler 33 may, for example, determine the assignment of the wireless resources in such a manner that the wireless resources respectively assigned to the plurality of mobile station apparatus MS served by the same relay apparatus R are not adjacent to one another.

By thus mapping the same signal to a plurality of adjacent wireless resources, the transmission characteristics of the transmission channels realized by the wireless resources assigned to the signal can be made close to each other. Since the signals to be combined in the receiver apparatus become close to each other in characteristics by repetitively transmitting the same signal over the transmission channels whose characteristics are close to each other, it can be expected that the reception quality further improves when the signals are combined.

According to the present invention, the same signal is transmitted in a repetitive manner by using a plurality of wireless resources between the relay apparatus R and the mobile station apparatus MS, and the signals repetitively received at the receiving end are combined. This serves to improves the signal to noise ratio in the communication between the relay apparatus R and the mobile station apparatus MS.

Next, another embodiment of the relay apparatus R will be described. For example, in the above-described relay apparatus constructed from a booster apparatus or the like, the received wireless signal is first amplified by an amplifier to a prescribed level, and then the amplified signal is transmitted out. As a result, the relay apparatus transmits not only the signal component of the received wireless signal, but also any noise that occurred within the amplifier in the relay apparatus. If there are a plurality of relay apparatuses within the coverage area of the base station apparatus, noise components output from the plurality of relay apparatuses are added up, resulting in a reduction of channel capacity.

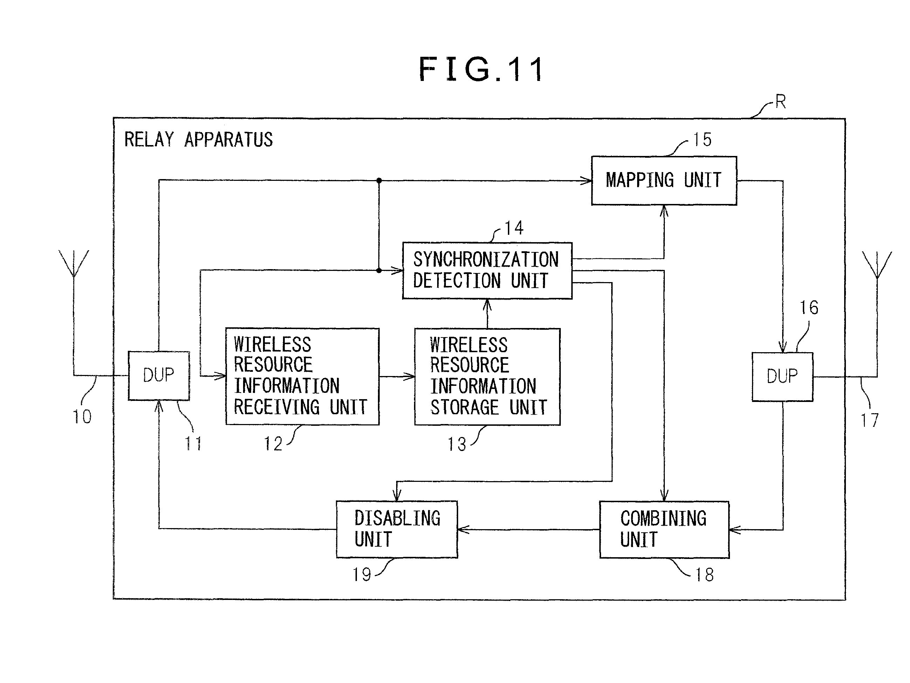

In uplink transmission, the present embodiment disables signal output on any wireless resource other than the resources used to transmit to the base station apparatus BS the uplink signal of the mobile station apparatus MS located within the coverage area of the relay apparatus R. Figure 11 is a diagram illustrating a second configuration example of the relay apparatus R depicted in Figure 1.

Reference numeral 19 designates a disabling unit. That is, the relay apparatus R includes the disabling unit 19. The same component elements as those of the relay apparatus R depicted in Figure 2 are designated by the same reference numerals. Based on the timing signal generated by the synchronization detection unit 14, the disabling unit 19 controls the wireless resources onto which signals are output from the antenna 10. That is, the disabling unit i9 disables signal output on any wireless resource other than the wireless resources used to transmit the uplink signal of the mobile station apparatus MS served by the relay apparatus.

For example, in the uplink signals depicted in Figure 8B, the disabling unit 19 disables the output of the antenna 10 in the time slots 521 and 523, i.e., the time slots other than the time slots 522 and 524 used to transmit the uplink signal of the mobile station apparatus MS3. Further, in the uplink signals depicted in Figure 9B, for example, the disabling unit 19 disables the output of subcarriers in the frequency bands 532 and 534, i.e., the frequency bands other than the frequency bands 531 and 533 used to transmit the uplink signal of the mobile station apparatus MS3.

The present embodiment thus reduces the noise output from the relay apparatus R. This serves to prevent the noise from the plurality of relay apparatuses from increasing and leading to a reduction in channel capacity.

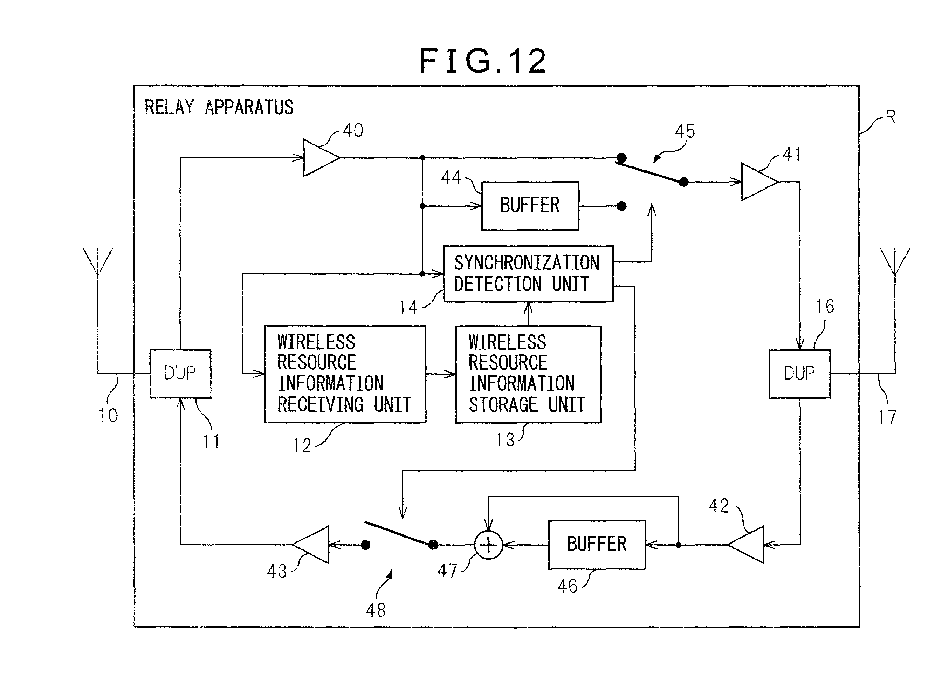

Next, a description will be given of an embodiment implemented in a communication system employing a time division multiple access scheme. Figure 12 is a diagram illustrating a third configuration example of the relay apparatus R depicted in Figure 1. Reference numerals 40 and 42 are low-noise amplifiers, 41 and 43 are high-power amplifiers, 44 and 46 are buffers, 45 and 48 are switches, and 47 is an adder.

The relay apparatus R thus includes the low-noise amplifiers 40 and 42, the high-power amplifiers 41 and 43, the buffers 44 and 46, the switches 45 and 48, and the adder 47. The same component elements as those of the relay apparatus R depicted in Figure 11 are designated by the same reference numerals.

The low-noise amplifier 40 amplifies the signal received via the antenna 10 and the antenna duplexer 11 from the base station apparatus BS. The high-power amplifier 41 amplifies the signal to be transmitted via the antenna duplexer 16 and the antenna 17 to the mobile station apparatus MS3. The low-noise amplifier 42 amplifiers the signal received via the antenna 17 and the antenna duplexer 16 from the mobile station apparatus MS3. The high-power amplifier 43 amplifies the signal to be transmitted via the antenna duplexer 11 and the antenna 10 to the base station apparatus BS. In the actual configuration, the low-noise amplifiers 40 and 42 are each followed by an analog-digital converter, and the high-power amplifiers 41 and 43 are each preceded by a digital-analog converter, but these converters are not depicted or described for simplicity of illustration. The same applies for other embodiments.

The buffer 44 stores the downlink signal to be relayed to the designated mobile station apparatus MS3. The switch 45 is used to select the input to the high-power amplifier 41 in accordance with the timing signal generated by the synchronization detection unit 14. More specifically, during the period that the downlink signal destined for the mobile station apparatus MS3 is being received, the switch 45 operates to supply the signal received by the antenna 10 to the high-power amplifier 41. On the other hand, in the time slot specified by the wireless resource information to retransmit the same downlink signal, the switch 45 operates to supply the downlink signal stored in the buffer 44 to the high-power amplifier 41.

By such operation of the switch 45, the downlink signal destined for the mobile station apparatus MS3 is transmitted in a repetitive manner by using a plurality of time slots. That is, the downlink signal is mapped to a plurality of wireless resources. Thus, the buffer 44 and the switch 45 are given as one example of the mapping unit 15 in the relay apparatus R depicted in Figure 11.

The buffer 46 stores the uplink signal received from the designated mobile station apparatus MS3. The adder 47 adds the unlink signal stored in the buffer 46 to the same unlink signal received in the immediately succeeding time slot, and thus combines the signals. The buffer 46 and the adder 47 are given as one example of the combining unit 18 in the relay apparatus R depicted in Figure 11.

When transmitting the uplink signal of the mobile station apparatus MS3 to the base station apparatus BS, the switch 48 operates to connect the output of the adder 47 to the high-power amplifier 43. At other times, signal input to the high-power amplifier 43 is disabled. The switch 48 thus operates to disable the relay apparatus R from outputting any uplink signal, except when transmitting the uplink signal of the designated mobile station apparatus MS3. Thus, the switch 48 is given as one example of the disabling unit 19 in the relay apparatus R depicted in Figure 11.

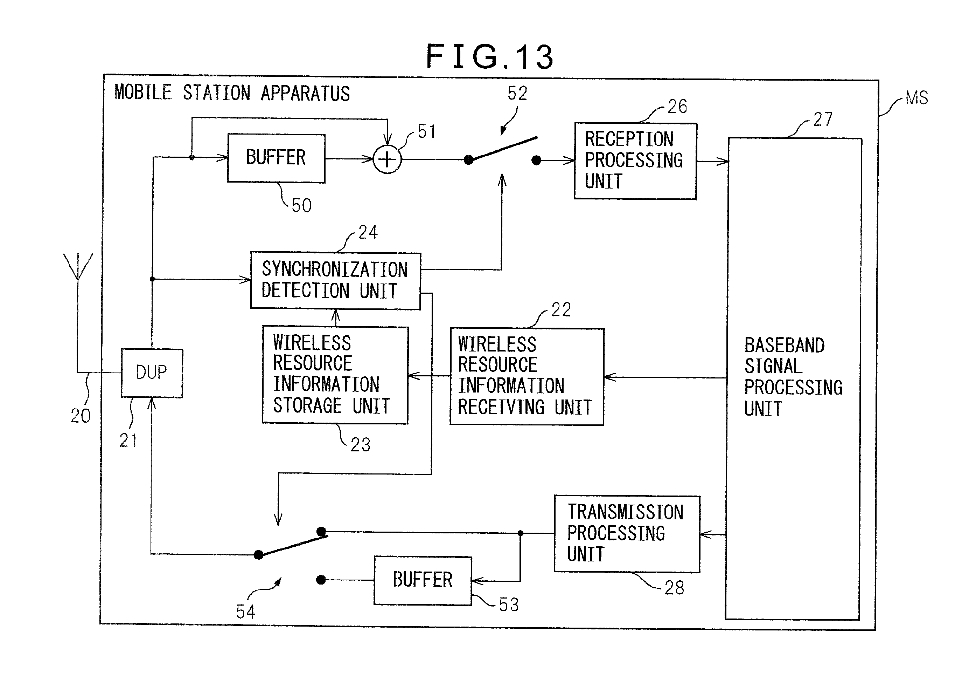

Figure 13 is a diagram illustrating a second configuration example of the mobile station apparatus MS depicted in Figure 1. Reference numerals 50 and 53 are buffers, 51 is an adder, and 52 and 54 are switches. The mobile station apparatus MS thus includes the buffers 50 and 53, the adder 51, and the switches 52 and 54. The same component elements as those of the mobile station apparatus MS depicted in Figure 3 are designated by the same reference numerals. In the actual configuration, an analog-digital converter is placed between the antenna duplexer 21 and the buffer 50, and a digital-analog converter is placed between the switch 54 and the antenna duplexer 21, but these converters are not depicted or described for simplicity of illustration.

The buffer 50 stores the downlink signal received from the relay apparatus R. The adder 51 adds the downlink signal stored in the buffer 50 to the same downlink signal received in the immediately succeeding time slot, and thus combines the signals. The switch 52 operates to couple the downlink signal, output from the adder 51, to the input of the reception processing unit 26 in accordance with the timing signal output from the synchronization detection unit 24. Thus, the buffer 50, the adder 51, and the switch 52 are given as one example of the combining unit 25 in the mobile station apparatus MS depicted in Figure 3.

The buffer 53 stores the uplink signal to be transmitted to the relay apparatus R. The switch 54 is used to select the signal to be supplied to the antenna 20 in accordance with the timing signal generated by the synchronization detection unit 24. More specifically, in the first time slot used to transmit the uplink signal from the mobile station apparatus MS3 to the relay apparatus R, the switch 54 operates to supply the signal output from the transmission processing unit 28 to the antenna 20. On the other hand, in the time slot specified by the wireless resource information to retransmit the same uplink signal, the switch 54 operates to supply the uplink signal stored in the buffer 53 to the antenna 20. Thus, the buffer 53 and the switch 54 are given as one example of the mapping unit 29 in the mobile station apparatus MS depicted in Figure 3.

According to the present invention, in a communication system employing a time division multiple access scheme, the signal to noise ratio can be improved in the communication between the relay apparatus R and the mobile station apparatus MS by repetitively transmitting signals using a plurality of wireless resources between the relay apparatus R and the mobile station apparatus MS.

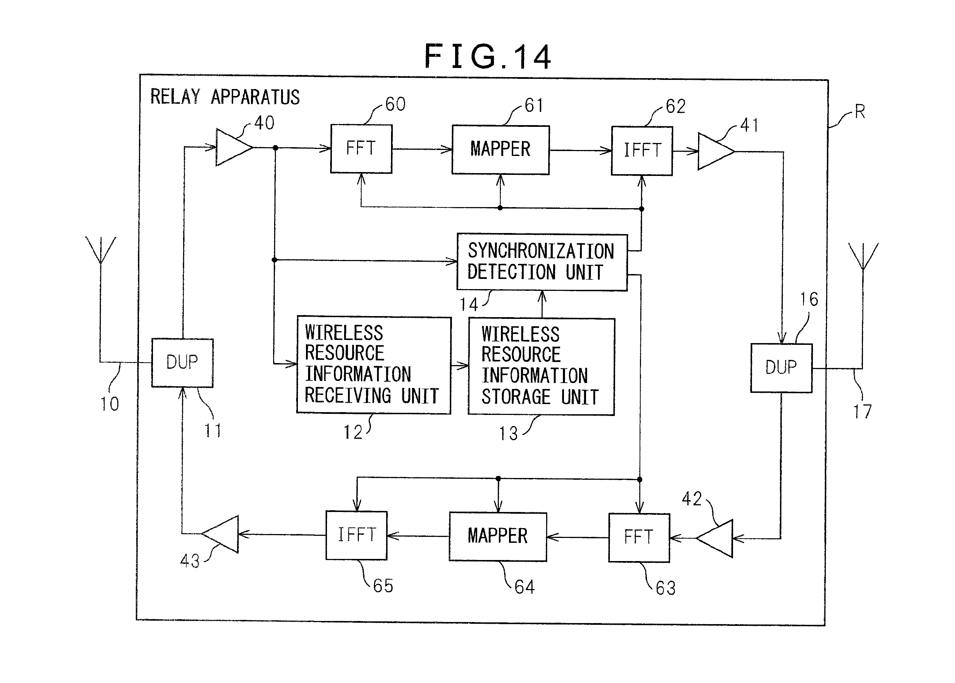

Next, a description will be given of an embodiment implemented in a communication system employing an orthogonal frequency division multiple access (OFDMA) scheme as one example of a frequency division multiple access scheme. Figure 14 is a diagram illustrating a fourth configuration example of the relay apparatus R depicted in Figure 1. Reference numerals 60 and 63 each designate a fast Fourier transform (FFT) unit, and 61 designates a first mapper. Further, reference numerals 62 and 65 each designate an inverse fast Fourier transform (IFFT) unit, and 64 designates a second mapper.

The relay apparatus R thus includes the fast Fourier transform, units 60 and 63, the first and second mappers 61 and 64, and the inverse fast Fourier transform units 62 and 65. The same component elements as those of the relay apparatus R depicted in Figure 11 are designated by the same reference numerals. In the actual configuration, the inverse fast Fourier transform units 62 and 65 are each followed by a cyclic prefix (CP) adding unit, which is not depicted or described for simplicity of illustration. The same applies for other embodiments.

The synchronization detection unit 14 supplies a timing signal for symbol timing synchronization to the fast Fourier transform units 60 and 63, the first and second mappers 61 and 64, and the inverse fast Fourier transform units 62 and 65. The fast Fourier transform unit 60 Fourier-transforms the OFDM (Orthogonal Frequency Division Multiple) signal received from the base station apparatus BS and thereby extracts a complex symbol sequence modulating the plurality of subcarriers. The inverse fast Fourier transform unit 62 regenerates the OFDM signal by modulating the plurality of subcarriers with the complex symbol sequence. The regenerated OFDM signal is amplified by the high-power amplifier 41 and output on the antenna 17 for transmission.

The complex symbols output from the fast Fourier transform unit 60 are supplied to the inverse fast Fourier transform unit 62. The first mapper 61 performs mapping between the complex symbols output from he fast Fourier transform unit; 60 and the complex symbols that the inverse fast Fourier transform unit 62 uses to modulate the respective subcarriers. The first mapper 61 may perform the mapping so that the plurality of subcarriers specified by the wireless resource information as the subcarriers for transmitting the downlink signal to the designated mobile station apparatus MS3 will be modulated by the complex symbols contained in the downlink signal to be relayed to the mobile station apparatus MS3.

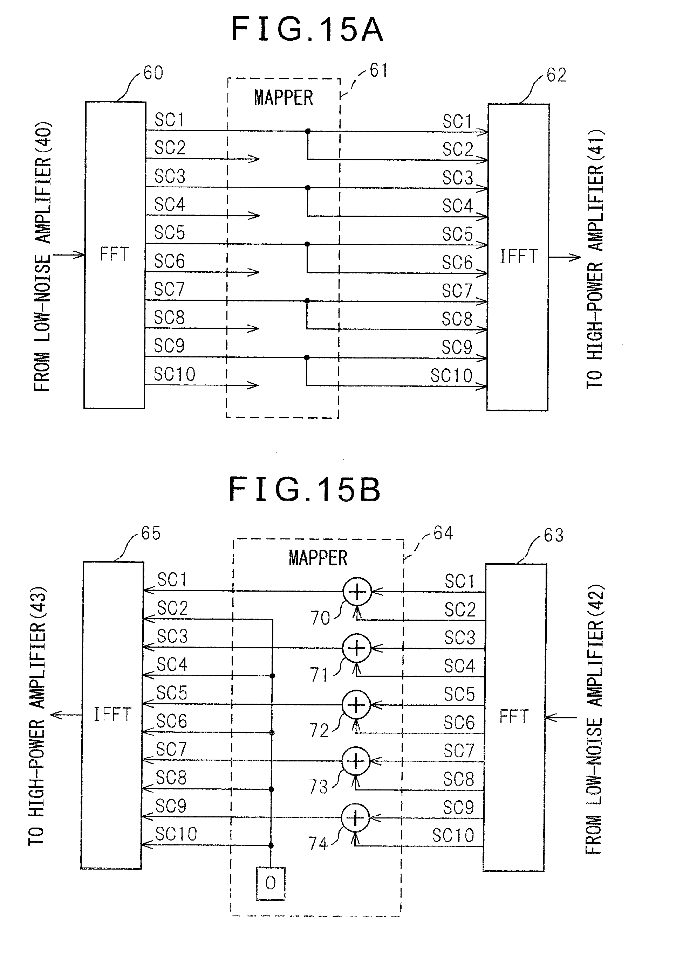

Figure 15A is a diagram illustrating a configuration example of the first mapper 61. The complex symbols respectively modulating the plurality of subcarriers SC1 to SC10 are output from the fast Fourier transform unit 60. The first mapper 61 identifies the complex symbol modulating the subcarrier SC1 assigned to the mobile station apparatus MS served by the relay apparatus R, and supplies it to the inverse fast Fourier transform unit 62 as the complex symbol to modulate the plurality of subcarriers SC1 and SC2. Likewise, the first mapper 61 identifies the complex symbol modulating the subcarrier SC3 assigned to the mobile station apparatus MS served by the relay apparatus R, and supplies it to the inverse fast Fourier transform unit 62 as the complex symbol to modulate the plurality of subcarriers SC3 and SC4. The same processing is repeated for each of the other subcarriers SC5, SC7, and SC9 assigned to the mobile station apparatus MS served by the relay apparatus R.

With such mapping, the downlink signal destined for the mobile station apparatus MS3 is transmitted in a repetitive manner by using a plurality of frequency bands. That is, the downlink signal is mapped to the plurality of wireless resources. Thus, the fast Fourier transform unit 60, the first mapper 61, and the inverse fast Fourier transform unit 62 are given as one example of the mapping unit 15 in the relay apparatus R depicted in Figure 11.

Reference is made to Figure 14. The fast Fourier transform unit 63 Fourier-transforms the OFDM signal received from the mobile station apparatus MS3 and thereby extracts a complex symbol sequence modulating the plurality of subcarriers. The inverse fast Fourier transform unit 65 regenerates the OFDM signal by modulating the plurality of subcarriers with the complex symbol sequence. The regenerated OFDM signal is amplified by the high-power amplifier 43 and output on the antenna 10 for transmission.

The complex symbols output from the fast Fourier transform unit 63 are supplied to the inverse fast Fourier transform unit 65. The second mapper 64 performs mapping between the complex symbols output from the fast Fourier transform unit 63 and the complex symbols that the inverse fast Fourier transform unit 65 uses to modulate the respective subcarriers.

The second mapper 64 combines the complex symbols respectively modulating the plurality of subcarriers specified by the wireless resource information as the subcarriers for transmitting the uplink signal from the mobile station apparatus MS3 served by the relay apparatus R. The second mapper 64 maps the symbols to be supplied to the inverse fast Fourier transform unit 65 so that the subcarriers assigned to transmit the uplink signal of the mobile station apparatus MS3 from the relay apparatus R will be modulated by the respectively combined symbols.

Figure 15B is a diagram illustrating a configuration example of the second mapper 64. The second mapper 64 includes adders 70 to 74 for respectively combining the complex symbols extracted from the plurality of subcarriers. The complex symbols respectively modulating the plurality of subcarriers SC1 to SC10 are output from the fast Fourier transform unit 63.

The adder 70 adds together the complex symbols respectively modulating the plurality of subcarriers SC1 and SC2 specified by the wireless resource information as the subcarriers for transmitting the uplink signal from the mobile station apparatus MS served by the relay apparatus R. The second mapper 64 supplies the complex symbol output from the adder 70 to the inverse fast Fourier transform unit 65 as the complex symbol to modulate the subcarrier SC1. Likewise, the adder 71 adds together the complex symbols respectively modulating the plurality of subcarriers SC3 and SC4 specified by the wireless resource information. The second mapper 64 supplies the complex symbol output from the adder 71 to the inverse fast Fourier transform unit 65 as the complex symbol to modulate the subcarrier SC3. The same processing is repeated for each of the other subcarrier pairs, SC5 and SC6, SC7 and SC8, and SC9 and SC10, specified by the wireless resource information.

With such mapping, the fast Fourier transform unit 63, the second mapper 64, and the inverse fast Fourier transform unit 65 combine the uplink signals transmitted from the mobile station apparatus MS3 in a repetitive manner by using the plurality of carriers. Thus, the fast Fourier transform unit 63, the second mapper 64, and the inverse fast Fourier transform unit 65 are given as one example of the combining unit 18 in the relay apparatus R depicted in Figure 11.

Further, the second mapper 64 supplies "0" to the inverse fast Fourier transform unit 65 as the symbol for modulating the subcarriers SC2, SC4, SC6, SC8, and SC10 that are not used to transmit the uplink signal to the base station apparatus BS. As a result, these subcarrier components are not output from the relay apparatus R. The second mapper 64 here is given as one example of the disabling unit 19 in the relay apparatus R depicted in Figure 11.

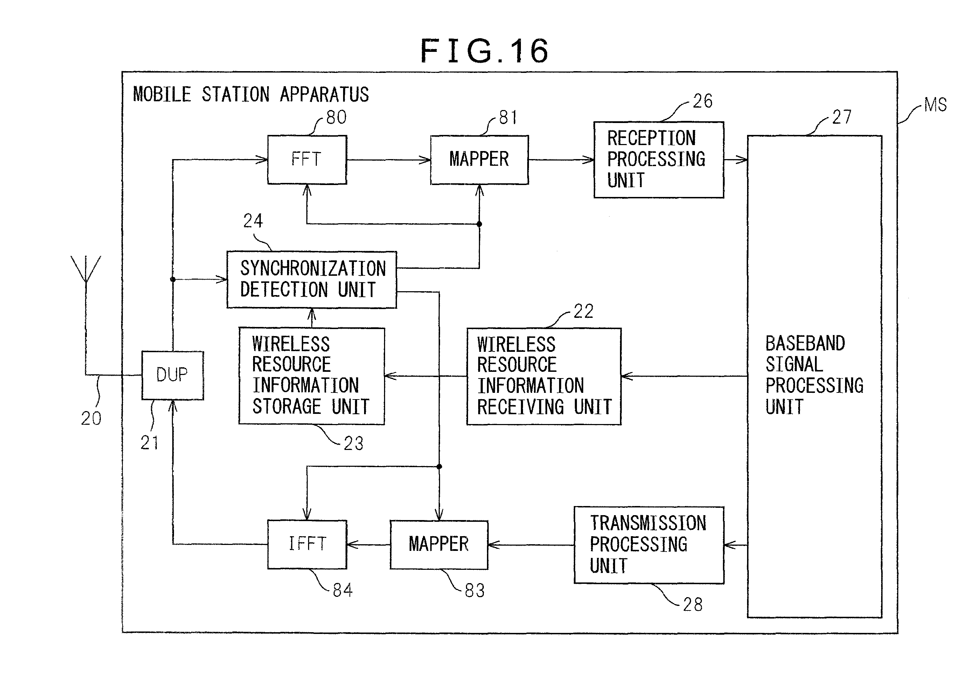

Figure 16 is a diagram illustrating a third configuration example of the mobile station apparatus MS depicted in Figure 1. Reference numeral 30 designates fast Fourier transform unit, and 81 designates a first mapper. Further, reference numeral 83 designates a second mapper, and 84 designates an inverse fast Fourier transform unit. The mobile station apparatus MS thus includes the fast Fourier transform unit 80, the first and second mappers 81 and 83, and the inverse fast Fourier transform unit 84. The same component elements as those of the mobile station apparatus MS depicted in Figure 3 are designated with the same reference numerals. In the actual configuration, an analog-digital converter is placed between the antenna duplexer 21 and the fast Fourier transform unit 80, and a digital-analog converter is placed between the inverse fast Fourier transform unit 84 and the antenna duplexer 21, but these converters are not depicted or described for simplicity of illustration. Further, in the actual configuration, the inverse fast Fourier transform unit 84 is followed by a cyclic prefix (CP) adding unit, which is not depicted or described for simplicity of illustration.

The synchronization detection unit 24 supplies a timing signal for symbol timing synchronization to the fast Fourier transform unit 80, the first and second mappers 81 and 83, and the inverse fast Fourier transform unit 84. The fast Fourier transform unit 80 Fourier-transforms the OFDM signal received from the relay apparatus R and thereby extracts a complex symbol sequence modulating the plurality of subcarriers. The reception processing unit 26 demodulates and decodes the complex symbol sequence extracted by the fast Fourier transform unit 80.

The first mapper 81 performs mapping between the complex symbols output from the fast Fourier transform unit 80 and the complex symbols to be demodulated and decoded by the reception processing unit 26. The first mapper 8 combines the complex symbols respectively modulating the plurality of subcarriers specified by the wireless resource information as the subcarriers for transmitting the downlink signal from the relay apparatus R. The first mapper 81 supplies the respectively combined symbols to the reception processing unit 26 as the complex symbols to be demodulated and decoded. The configuration of the first mapper 81 may be the same as that of the second mapper 64 depicted in Figure 15B. The fast Fourier transform unit 80 and the first mapper 81 are given as one example of the combining unit 25 in the mobile station apparatus MS depicted in Figure 3.

The inverse fast Fourier transform unit 84 generates the OFDM signal by modulating the plurality of subcarriers with the complex symbol sequence supplied from the transmission processing unit 28. The generated OFDM signal is fed via the antenna duplexer 22 to the antenna 20 for transmission.

The second mapper 83 performs mapping between the complex symbols output from the transmission processing unit 28 and the complex symbols that the inverse fast Fourier transform unit 84 uses to modulate the respective subcarrier. The second mapper 83 may perform the mapping so that the plurality of subcarriers specified by the wireless resource information as the subcarriers for transmitting the uplink signal from the mobile station apparatus MS3 will be modulated by the complex symbols contained in the uplink signal to be transmitted from the mobile station apparatus MS3. The configuration of the second mapper 83 may be the same as that of the first mapper 61 depicted in Figure 15A. The second mapper 83 and the inverse fast Fourier transform unit 84 are given as one example of the mapping unit 29 in the mobile station apparatus MS depicted in Figure 3.

According to the present invention, in a communication system employing an orthogonal frequency division multiple access scheme, the signal to noise ratio can be improved in the communication between the relay apparatus R and the mobile station apparatus MS by repetitively transmitting signals using a plurality of wireless resources between, the relay apparatus R and the mobile station apparatus MS.

The configurations of the relay apparatus R depicted in Figures 12 and 14 may be combined together, and further, the configurations of the mobile station apparatus MS depicted in Figures 13 and 16 may also be combined together. By thus combining the configuration for implementing the time division multiple access scheme with the configuration for implementing the orthogonal frequency division multiple access scheme, the same signal may be mapped in a repetitive manner to a plurality of time slots and a plurality of frequency resources between the relay apparatus R and the mobile station apparatus MS.

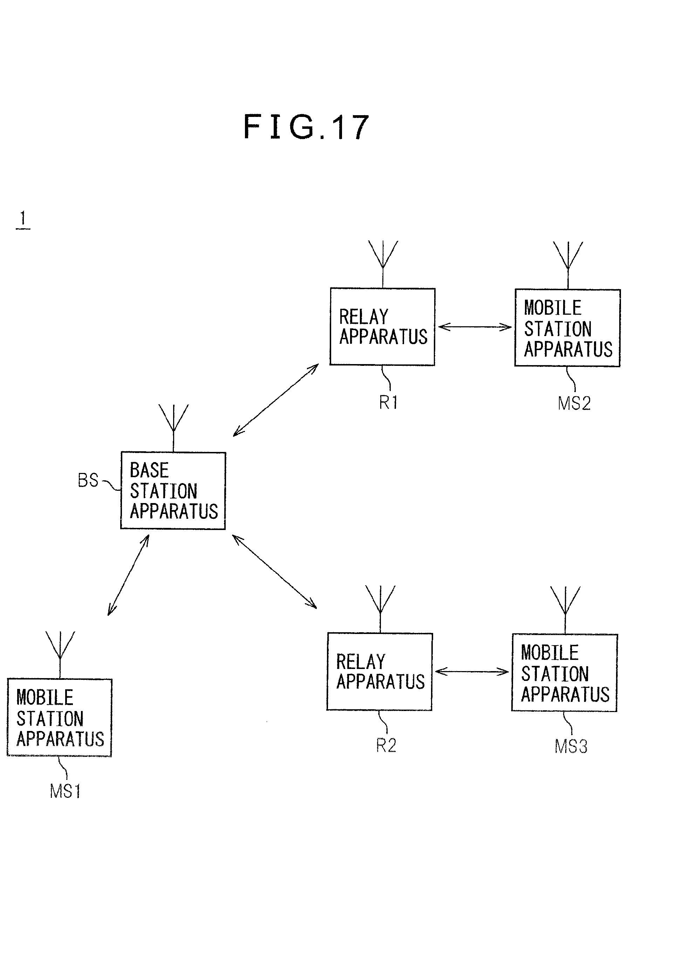

Figure 17 is a diagram illustrating the configuration of a second embodiment implemented in a wireless communication system 1. Reference numerals R1 and R2 designate relay apparatuses. The relay apparatuses R1 and R2 may be collectively designated as the relay apparatus R. In the present embodiment, the plurality of relay apparatuses R1 and R2 are provided in the wireless communication system 1. The same component elements as those of the wireless communication system 1 depicted in Figure 1 are designated by the same reference numerals. In the present embodiment, it is assumed that the mobile station apparatus MS2 is served by the relay apparatus R1 and the mobile station apparatus MS3 by the relay apparatus R2.

In the present embodiment, unique orthogonal codes are assigned to the respective relay apparatuses R1 and R2 so that interference does not occur between the wireless signal transmitted/received by the relay apparatus R1 and the wireless signal transmitted/received by the relay apparatus R2 even if the coverage areas of the relay apparatuses R1 and R2 overlap each other. In each of the coverage areas of the relay apparatuses R1 and R2, signals repetitively mapped to a plurality of wireless resources are transmitted by multiplying the signals with the corresponding bits contained in the orthogonal code, thereby reducing interference between the relay apparatuses.

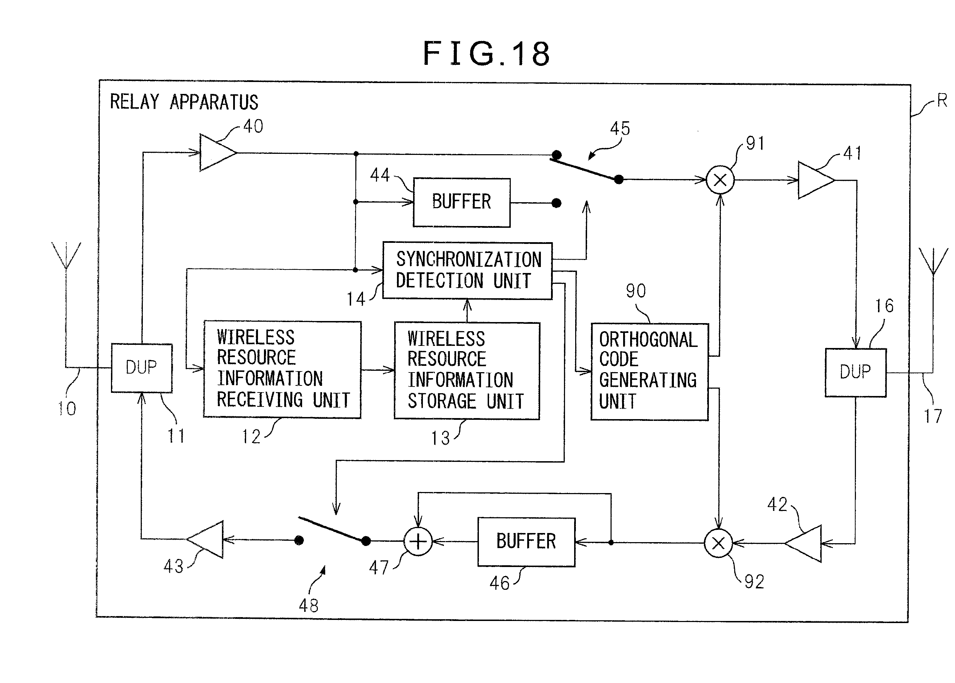

Figure 18 is a diagram illustrating a first configuration example of the relay apparatus R depicted in Figure 17. Reference numeral 90 designates an orthogonal code generating unit, and 91 and 92 each designate a multiplier. The relay apparatus R thus includes the orthogonal code generating unit 90 and the multipliers 91 and 92. The same component elements as those of the relay apparatus R depicted in Figure 12 are designated by the same reference numerals.

The orthogonal code generating unit 90 generates an orthogonal code unique to the relay apparatus R with timing defined by the timing signal generated by the synchronization detection unit 14. The orthogonal code generated here may, for example, be a Walsh code or a Hadamard code. In the illustrated example, it is assumed that a code "1, 1" and a code "1, -1" are assigned as the orthogonal codes to the respective relay apparatuses R1 and R2 depicted in Figure 17.

In the multiplier 91, downlink signals repetitively mapped to a plurality of time slots by using the buffer 44 and switch 45 are multiplied with the orthogonal code. More specifically, in the multiplier 91, downlink signals repetitively mapped to a plurality of time slots are each multiplied with a corresponding one of the bits contained in the orthogonal code.

Suppose, for example, that the same downlink signal has been mapped in a repetitively manner to two time slots. Then, in the relay apparatus R1, the multiplier 91 multiplies the downlink signals mapped to the first time slot and the second time slot, respectively, with the first bit "1" and the second bit "1" contained in the orthogonal code. Likewise, in the relay apparatus R2, the multiplier 91 multiplies the downlink signals mapped to the first time slot and the second time slot, respectively, with the first bit "1" and the second bit "-1" contained in the orthogonal code.

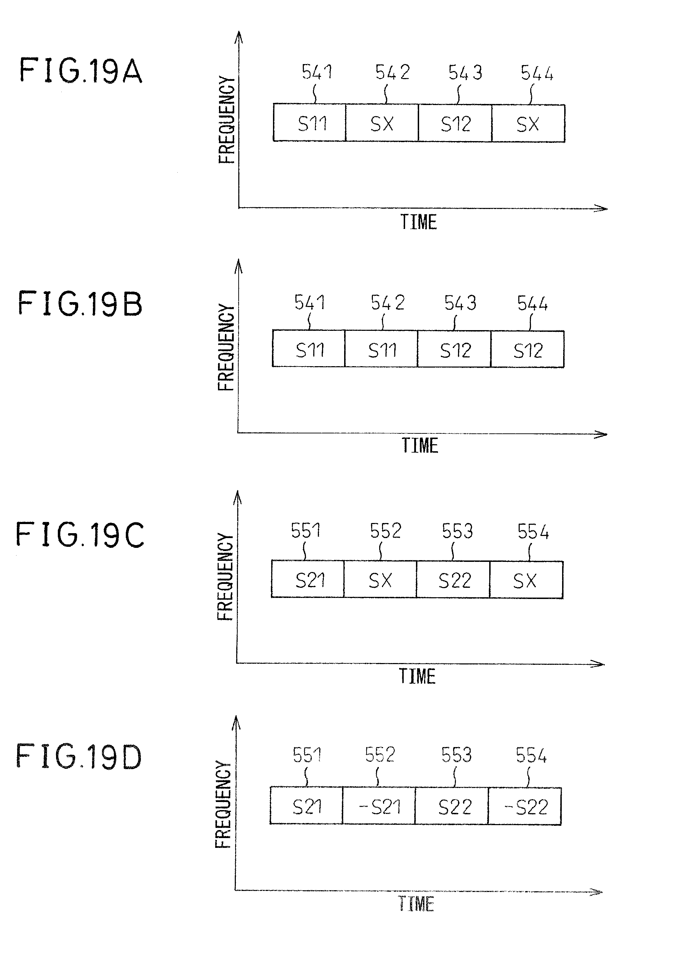

Figure 19A depicts an example of the downlink signal outside the coverage area of the relay apparatus R1. Reference numerals 541 to 544 indicate four successive time slots. The time slots 541 and 543 are assigned to the downlink signals S11 and S12 destined for the mobile station apparatus MS2 served by the relay apparatus R1. On the other hand, the time slots 542 and 544 are assigned to mobile station apparatuses not served by the relay apparatus R1.

Figure 19B depicts an example of the downlink signal within the coverage area of the relay apparatus R1. In this example, the downlink signal S11 transmitted in the time slot 541 in Figure 9A is mapped to the time slot 541 and its immediately succeeding time slot 542 in a repetitive manner. Likewise, the downlink signal S12 transmitted in the time slot 543 in Figure 9A is mapped to the time slot 543 and its immediately succeeding time slot 544 in a repetitive manner.

The downlink signals S11 mapped to the successive time slots 541 and 542 are respectively multiplied with the first bit "1" and the second bit "1" of the orthogonal code. Likewise, the downlink signals S12 mapped to the successive time slots 543 and 544 are respectively multiplied with the first bit "1" and the second bit "1" of the orthogonal code.

Figure 19C depicts an example of the downlink signal outside the coverage area of the relay apparatus R2. Reference numerals 551 to 554 indicate four successive time slots. The time slots 551 and 553 are assigned to the downlink signals S21 and S22 destined for the mobile station apparatus MS3 served by the relay apparatus R2. On the other hand, the time slots 552 and 554 are assigned to mobile station apparatuses not served by the relay apparatus R2.

Figure 19D depicts an example of the downlink signal within the coverage area of the relay apparatus R2. In this example, the downlink signal S21 transmitted in the time slot 551 in Figure 9C is mapped to the time slot 551 and its immediately succeeding time slot 552 in a repetitive manner. The downlink signal S22 transmitted in the time slot 553 in Figure 9C is mapped to the time slot 553 and its immediately succeeding time slot 554 in a repetitive manner.

The downlink signals S21 mapped to the successive time slots 551 and 552 are respectively multiplied with the first bit "1" and the second bit "-1" of the orthogonal code. As a result, the signal -S21 to be transmitted in the time slot 552 is an inverted version of the signal S21 to be transmitted in the time slot 551. Likewise, the downlink signals S22 mapped to the successive time slots 553 and 554 are respectively multiplied with the first bit "1" and the second bit "-1" of the orthogonal code. As a result, the signal -S22 to be transmitted in the time slot 554 is an inverted version of the signal S22 to be transmitted in the time slot 553.

Reference is made to Figure 18. When transmitting an uplink signal, the mobile station apparatus MS served by the relay apparatus maps the signal to a plurality of time slots and multiplies the thus mapped signal with an orthogonal code as will be described later. When the uplink signal from the mobile station apparatus MS is received, the multiplier 92 multiplies the received signal with the orthogonal code unique to the relay apparatus R. The uplink signals mapped to the plurality of time slots and multiplied by the multiplier 92 with the orthogonal code are combined together by using the buffer 46 and the adder 47. If the orthogonal code multiplied on the uplink signal in the mobile station apparatus MS is identical to the orthogonal code unique to the relay apparatus R, the original uplink signal is regenerated by the combining operation performed by the buffer 46 and the adder 47.

If the orthogonal code multiplied on the uplink signal is not identical to the orthogonal code unique to the relay apparatus R, the signal component resulting from the combining operation performed by the buffer 46 and the adder 47 is "0". In this way, any signal received from mobile station apparatus MS served by another relay apparatus is prevented from interfering with the signal received from the mobile station apparatus MS served by the relay apparatus R.

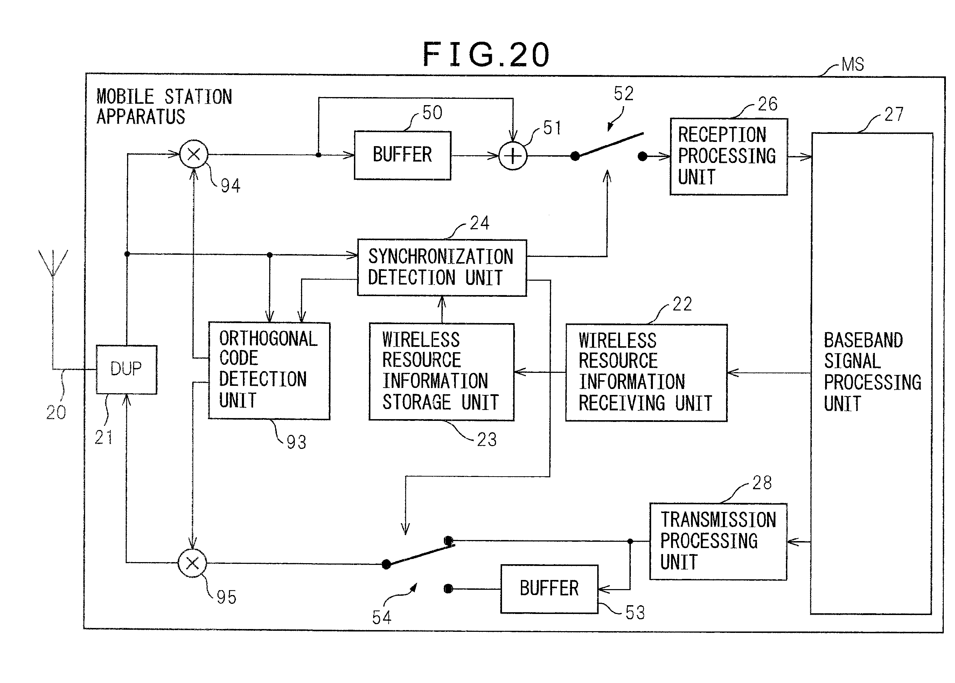

Figure 20 is a diagram illustrating a first configuration example of the mobile station apparatus MS depicted in Figure 17. Reference numeral 93 designates an orthogonal code detection unit, and 94 and 95 each designate a multiplier. The mobile station apparatus MS thus includes the orthogonal code detection unit 93 and the multipliers 94 and 95. The same component elements as those of the mobile station apparatus MS depicted in Figure 13 are designated by the same reference numerals. In the actual configuration, an analog-digital converter is placed between the antenna duplexer 21 and the multiplier 94, and a digital-analog converter is placed between the multiplier 95 and the antenna duplexer 21, but these converters are not depicted or described for simplicity of illustration.

The orthogonal code detection unit 93 detects the orthogonal code multiplied on the downlink signal mapped in a repetitive manner to the plurality of time slots of the received signal. For example, the orthogonal code detection unit 93 may multiply the downlink signal with each of a plurality of possible orthogonal codes expected to be assigned to the relay apparatus R, and may determine that the orthogonal code detected when a signal strength exceeding a predetermine threshold value is detected is the orthogonal code multiplied on the downlink signal.

In the multiplier 94, a the downlink signal mapped in a repetitive manner to the plurality of time slots of the received signal is multiplied with the detected orthogonal code. The original downlink signal is regenerated by the buffer 50 and the adder 51 by combining the downlink signals respectively mapped to the plurality of time slots and multiplied by the orthogonal code.

If a signal relayed by some other relay apparatus than the relay apparatus R serving the mobile station apparatus MS is received, the signal component received from such other relay apparatus becomes "0" as a result of the combining operation performed by the buffer 50 and the adder 51. In this way, any signal transmitted from another relay apparatus is prevented from interfering with the downlink signal being received by the mobile station apparatus MS.

In the multiplier 95, the uplink signal mapped in a repetitive manner to the plurality of time slots by means of the buffer 53 and the switch 54 is multiplied with the orthogonal code detected by the orthogonal code detection unit 93. The uplink signal multiplied with the orthogonal code is transmitted from the antenna 20 to the relay apparatus R.

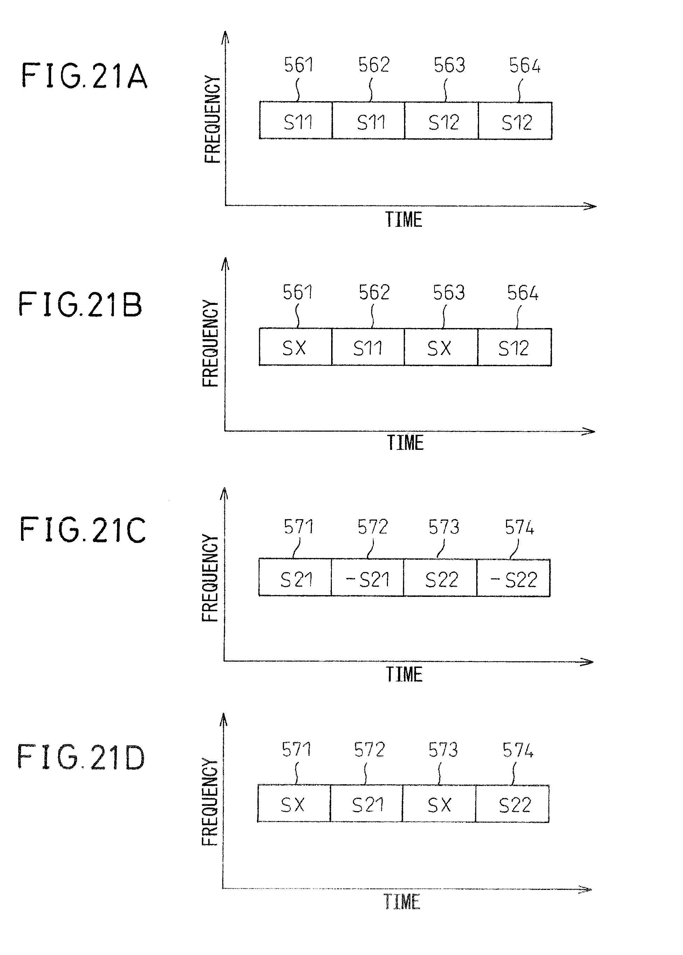

Figure 21A depicts an example of the uplink signal within the coverage area of the relay apparatus R1. Reference numerals 561 to 564 indicate four successive time slots. The uplink signal S11 is mapped to the time slot 561 and its immediately succeeding time slot 562 in a repetitive manner. Likewise, the uplink signal S12 is mapped to the time slot 563 and its immediately succeeding time slot 564 in a repetitive manner.

The uplink signals S11 mapped to the successive time slots 561 and 562 are respectively multiplied with the first bit "1" and the second bit "1" of the orthogonal code unique to the relay apparatus R1. Likewise, the uplink signals S12 mapped to the successive time slots 563 and 564 are respectively multiplied with the first bit "1" and the second bit "1" of the orthogonal code.

When the uplink signals depicted in Figure 21A are received by the relay apparatus R1, the multiplier 92 in the relay apparatus R1 multiplies the received uplink signals with the orthogonal code "1, 1" unique to the relay apparatus R. When the uplink signals multiplied with the orthogonal code are combined using the buffer 46 and the adder 47, the original uplink signal is regenerated.

Figure 21B depicts an example of the uplink signal outside the coverage area of the relay apparatus R1 that relays the uplink signals of Figure 21A. The original uplink signals S11 and S12 are transmitted in the time slots 562 and 564, respectively. The time slots 561 and 562 are assigned to mobile station apparatuses not served by the relay apparatus R1.

Figure 21C depicts an example of the uplink signal within the coverage area of the relay apparatus R2. Reference numerals 571 to 574 indicate four successive time slots. The uplink signal S21 is mapped to the time slot 571 and its immediately succeeding time slot 572 in a repetitive manner. The uplink signal S22 is mapped to the time slot 573 and its immediately succeeding time slot 574 in a repetitive manner.

The uplink signals S21 mapped to the successive time slots 571 and 572 are respectively multiplied with the first bit "1" and the second bit "-1" of the orthogonal code unique to the relay apparatus R2. As a result, the signal -S21 to be transmitted in the time slot 572 is an inverted version of the signal S21 to be transmitted in the time slot 571.

Likewise, the uplink signals S22 mapped to the successive time slots 573 and 574 are respectively multiplied with the first bit "1" and the second bit "-1" of the orthogonal code. As a result, the signal -S22 to be transmitted in the time slot 574 is an inverted version of the signal S22 to be transmitted in the time slot 573.

When the uplink signals depicted in Figure 21C are received by the relay apparatus R2, the multiplier 92 in the relay apparatus R2 multiplies the received uplink signals with the orthogonal code "1, -1" unique to the relay apparatus R. When the uplink signals multiplied with the orthogonal code are combined using the buffer 46 and the adder 47, the original uplink signal is regenerated.

Figure 21D depicts an example of the uplink signal outside the coverage area of the relay apparatus R2 that relays the uplink signals of Figure 21C. The original uplink signals S21 and S22 are transmitted in the time slots 572 and 574, respectively. The time slots 571 and 572 are assigned to mobile station apparatuses not served by the relay apparatus R2.

According to the present embodiment, it becomes possible to reduce the interference that may occur between the wireless signals transmitted/received by the plurality of relay apparatuses R1 and R2 when the relay apparatuses R1 and R2 are provided in the same wireless communication system 1.

The description given above with reference to Figures 18 to 21 has dealt with an embodiment implemented in a wireless communication system employing a time division multiple access scheme. It will also be noted that in a wireless communication system employing a frequency division multiple access scheme, interference between different relay apparatuses can likewise be reduced by multiplying an orthogonal code on the signals repetitively mapped to a plurality of frequency bands. Furthermore, in the case of a wireless communication system employing a time division multiple access scheme in combination with a frequency division multiple access, interference between different relay apparatuses can also be reduced by multiplying an orthogonal code on the signals repetitively mapped to a plurality of time slots and frequency bands.

Next, a description will be given of an alternative embodiment for reducing the interference that may occur between the wireless signals transmitted/received by the plurality of relay apparatuses R1 and R2. In this embodiment, interleaved frequency division multiple access (IFDMA) modulation is performed in the respective coverage areas of the plurality of relay apparatuses R1 and R2 by using phase rotations unique to the respective relay apparatuses R1 and R2. In the interleaved frequency division multiple access modulation, since signals are arranged in interleaved fashion between the coverage areas of the respective relay apparatuses R1 and R2 so as not to overlap each other along the frequency axis, interference between the plurality of relay apparatuses can be reduced.

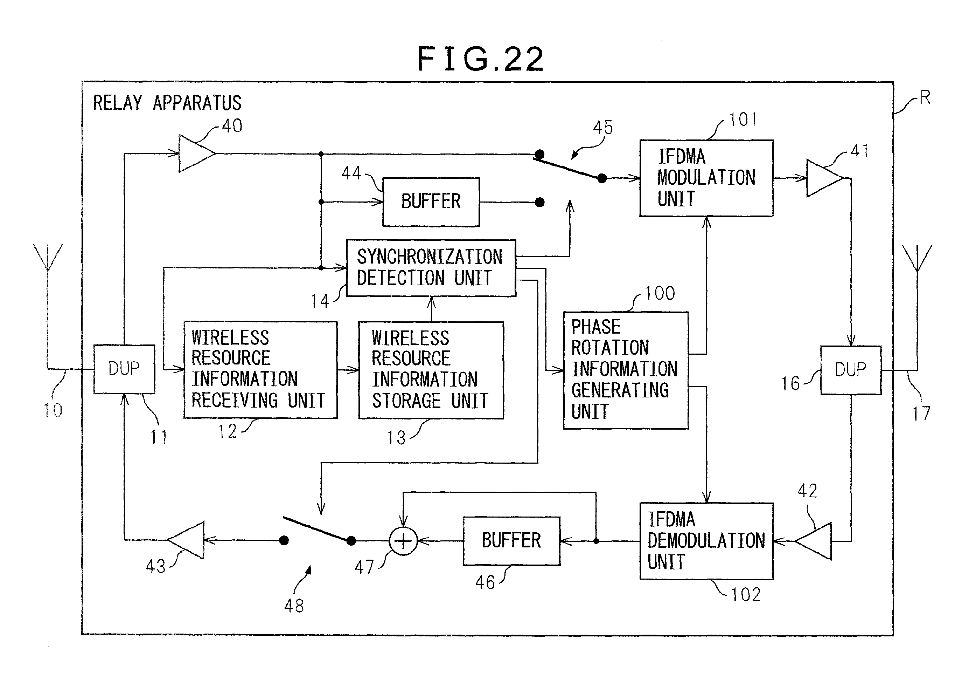

Figure 22 is a diagram illustrating a second configuration example of the relay apparatus R depicted in Figure 17. Reference numeral 100 is a phase rotation information generating unit, 101 is an IFDMA modulation unit, and 102 is an IFDMA demodulation unit. The relay apparatus R thus includes the phase rotation information generating unit 100, the IFDMA modulation unit 101, and the IFDMA demodulation unit 102. The same component elements as those of the relay apparatus R depicted in Figure 12 are designated by the same reference numerals.

I and Q complex components of the downlink signal are caused to occur in a plurality of time slots in a repetitive manner by using the buffer 44 and the switch 45. For simplicity of explanation, the I and Q complex components may sometimes be referred to as the "symbols". The phase rotation information generating unit 100 generates phase rotation amounts, θ1, θ2, θ3, θ4, ..., with which to multiply the respective symbols s1, s2, s3, s4, ... that occur in the plurality of time slots T1, T2, T3, T4, ... in a repetitive manner.

The step wiath (θ2-θ1) = (θ3-θ2) = (θ4-θ3), ... between the respective phase rotation amounts, θ1, θ2, ..., is uniquely determined for each relay apparatus R.

In the illustrated example, the same symbol is caused to occur in four time slots in a repetitive manner by using the buffer 44 and the switch 45. In this case, the phase rotation information generating unit 100 in the relay apparatus R1 may generate, for example, phase rotation amounts (0, π/2, π, 3π/2) that change by a step width of (π/2) from one to another. On the other hand, the phase rotation information generating unit 100 in the relay apparatus R2 may generate, for example, phase rotation amounts (0, π, 0, π) that change by a step width of π from one to another.

The IFDMA modulation unit 101 applies IFDMA modulation to the downlink signal in the coverage area of the relay apparatus R by applying phase rotations of amounts θ1, θ2, θ3, θ4, ... to the repetitively occurring symbols s1, s2, s3, s4, ... Since IFDMA modulation is applied by using the phase rotation amounts unique to the respective relay apparatuses R, the frequency spectra of the different relay apparatuses R become orthogonal to each other on the frequency axis, and interference between the relay apparatuses R is thus reduced.

As will be described later, each mobile station apparatus MS served by the relay apparatus causes the symbols s1, s2, s3, s4, ... of the uplink signal to occur in the plurality of time slots in a repetitive manner. The mobile station apparatus MS applies IFDMA modulation to the uplink signal by using the phase rotation amount unique to the relay apparatus R serving the mobile station apparatus MS.

The IFDMA demodulation unit 102 in the relay apparatus R applies IFDMA demodulation to the uplink signal by applying phase rotations of the unique amounts θ1, θ2, θ3, θ4, ... to the repetitively occurring symbols s1, s2, s3, s4, ... contained, in the uplink signal. The symbols s1, s2, s3, s4, ... occurring in the plurality of time slots in a repetitive manner are combined by using the buffer 46 and the adder 47.

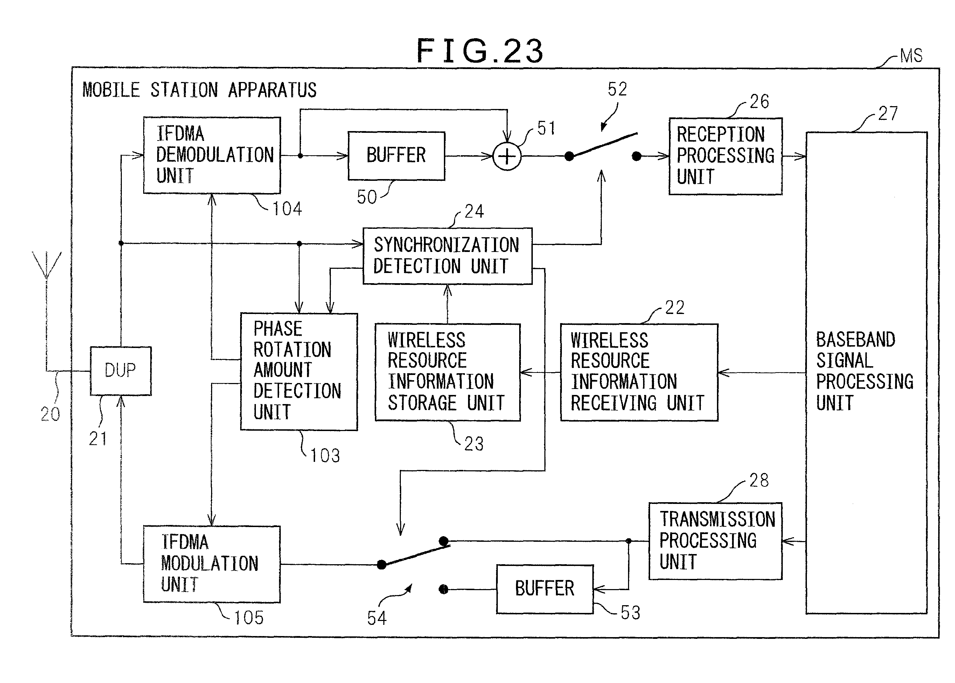

Figure 23 is a diagram illustrating a second configuration example of the mobile station apparatus MS depicted in Figure 17. Reference numeral 103 is a phase rotation amount detection unit, 104 is an IFDMA demodulation unit, and 105 is an IFDMA modulation unit. The mobile station apparatus MS thus includes the phase rotation amount detection unit 103, the IFDMA demodulation unit 104, and the IFDMA modulation unit 105. The same component elements as those of the mobile station apparatus MS depicted in Figure 13 are designated by the same reference numerals. In the actual configuration, an analog-digital converter is placed between the antenna duplexer 21 and the IFDMA demodulation unit 104, and a digital-analog converter is placed between the IFDMA modulation unit 105 and the antenna duplexer 21, but these converters are not depicted or described for simplicity of illustration.

When the IFDMA-modulated signal is received, the phase rotation amount detection unit 103 detects the phase rotation amounts θ1, θ2, θ3, θ4, ... used to modulate the signal. For example, the phase rotation amount detection unit 103 may apply IFDMA demodulation to the symbols contained in the received signal by using each of a plurality of possible phase rotation amounts expected to be assigned to the relay apparatus R, and may determine that the phase rotation amount detected when a signal strength exceeding a predetermine threshold value is detected is the phase rotation amount used for the modulation.

The IFDMA demodulation unit 104 applies IFDMA demodulation to the downlink signal by applying the detected phase rotation amounts θ1, θ2, θ3, θ4, ... to the repetitively occurring symbols s1, s2, s3, s4, ... contained in he received signal. The symbols s1, s2, s3, s4, ... occurring in the plurality of time slots in a repetitive manner are combined by using the buffer 50 and the adder 51.

On the other hand, the symbols contained in the uplink signal are caused to occur in a plurality of time slots in a repetitive manner by using the buffer 53 and the switch 54. The IFDMA modulation unit 105 applies IFDMA modulation to the uplink signal by applying the phase rotation amounts, θ1, θ2, θ3, θ4, ..., detected by the phase rotation amount detection unit 103, to the symbols s1, s2, s3, s4, ... occurring in the plurality of time slots in a repetitive manner. The IFDMA-modulated uplink signal is transmitted from the antenna 20 to the relay apparatus R.

According to the present embodiment, it becomes possible to reduce the interference that may occur between the wireless signals transmitted/received by the plurality of relay apparatuses R1 and R2 when the relay apparatuses R1 and R2 are provided in the same wireless communication system 1.

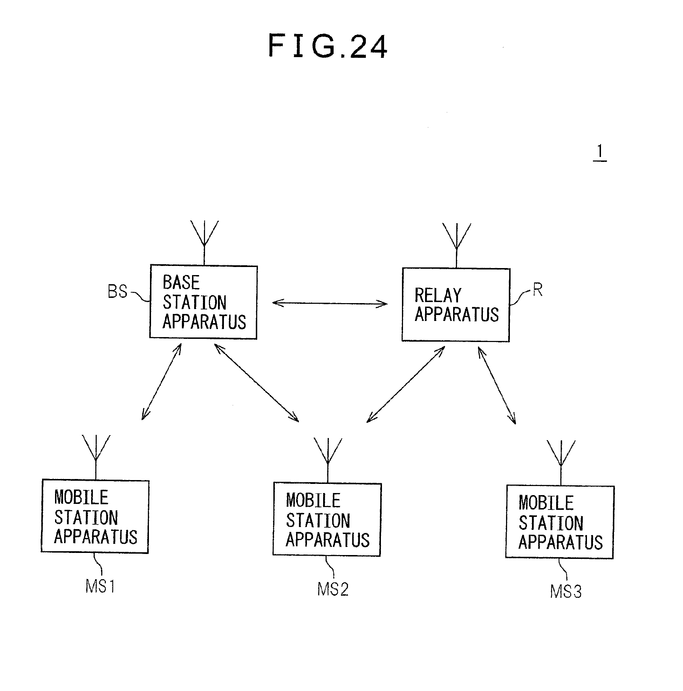

Next, one example of a scheduling method employed in the base station apparatus BS will be described. Figure 24 is a diagram illustrating the configuration of a third embodiment implemented in a wireless communications system 1. The same component elements as those of the wireless communication system 1 depicted in Figure 1 are designated by the same reference numerals. In the present embodiment, it is assumed that the mobile station apparatuses MS1 and MS2 directly communicate with the base station apparatus BS, while the mobile station apparatus MS3 is served by the relay apparatus R.

It is also assumed that the coverage area of the base station apparatus BS and the coverage area of the relay apparatus R are not separated from each other. For example, not only wireless signals transmitted from the base station apparatus BS but also wireless signals transmitted rom the relay apparatus R are received by the mobile station apparatus MS2, while on the other hand, wireless signals transmitted from the relay apparatus R are received not only by the base station apparatus BS but also by the mobile station apparatus MS2.

The present embodiment is intended to reduce the interference that may occur between the coverage area of the base station apparatus BS and the coverage area of the relay apparatus R. When scheduling the wireless resources, the base station apparatus BS assigns wireless resources to wireless communications with the mobile station apparatuses MS1 and MS2 not served by the relay apparatus R, by excluding the plurality of wireless resources that the mobile station apparatus MS3 uses within the coverage area of the relay apparatus R.

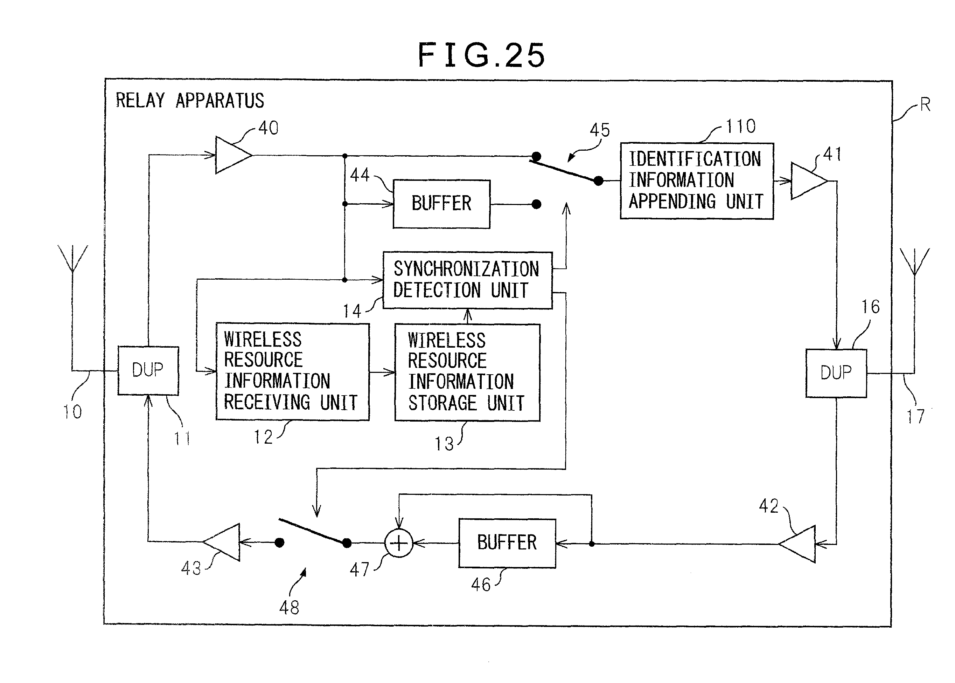

Figure 25 is a diagram illustrating a configuration example of the relay apparatus R depicted in Figure 24. Reference numeral 110 designates an identification information appending unit. The relay apparatus R thus includes the identification information appending unit 110. The same component elements as those of the relay apparatus R depicted in Figure 12 are designated by the same reference numerals. The identification information appending unit 110 appends, to the downlink signal to be transmitted from the antenna 17, information identifying that the downlink signal has been relayed by the relay apparatus R. The information appended to the wireless signal to identify that the signal has been relayed by the relay apparatus R will be referred to as the "identification information."

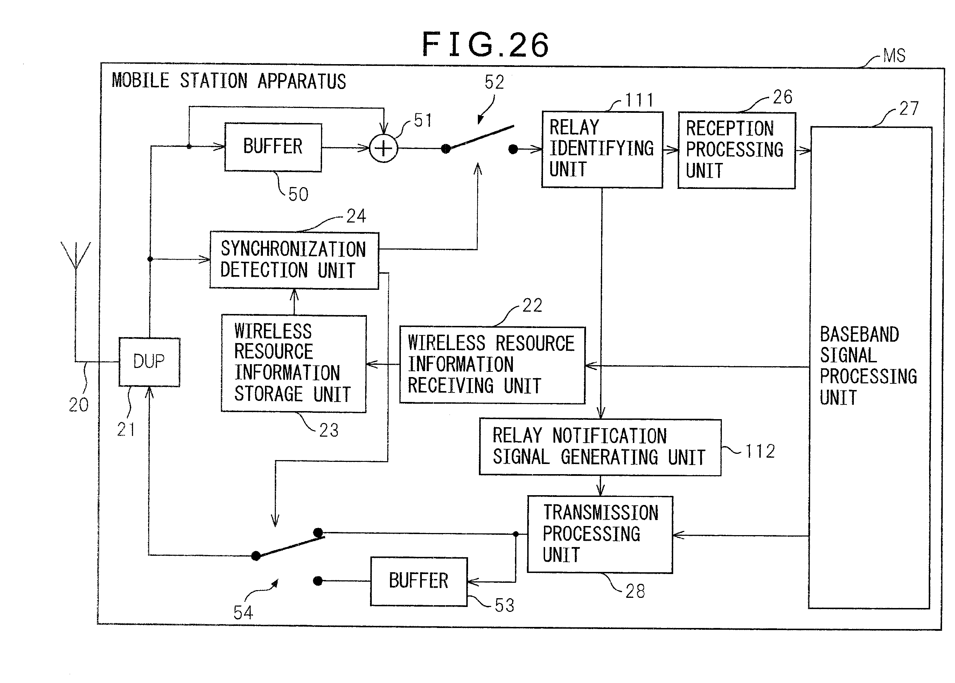

Figure 26 is a diagram illustrating a configuration example of the mobile station apparatus MS depicted in Figure 24. Reference numeral 111 is a relay identifying unit, and 112 is a relay notification signal generating unit. The mobile station apparatus MS thus includes the relay identifying unit 111 and the relay notification signal generating unit 112. The same component elements as those of the mobile station apparatus MS depicted in Figure 13 are designated by the same reference numerals. In the actual configuration, an analog-digital converter is placed between the antenna duplexer 21 and the buffer 50, and a digital-analog converter is placed between the switch 54 and the antenna duplexer 21, but these converters are not depicted or described for simplicity of illustration.

The relay identifying unit 111 detects identification information from the received downlink signal and identifies whether the received signal is one that has been relayed by the relay apparatus R. The relay identifying unit 111 outputs an identification result signal indicating the result of the identification. The relay notification signal generating unit 112, in accordance with the identification result signal, generates a relay notification signal indicating that the mobile station apparatus MS is currently served by the relay apparatus R. The transmission processing unit 28 transmits the relay notification signal to the base station apparatus BS.

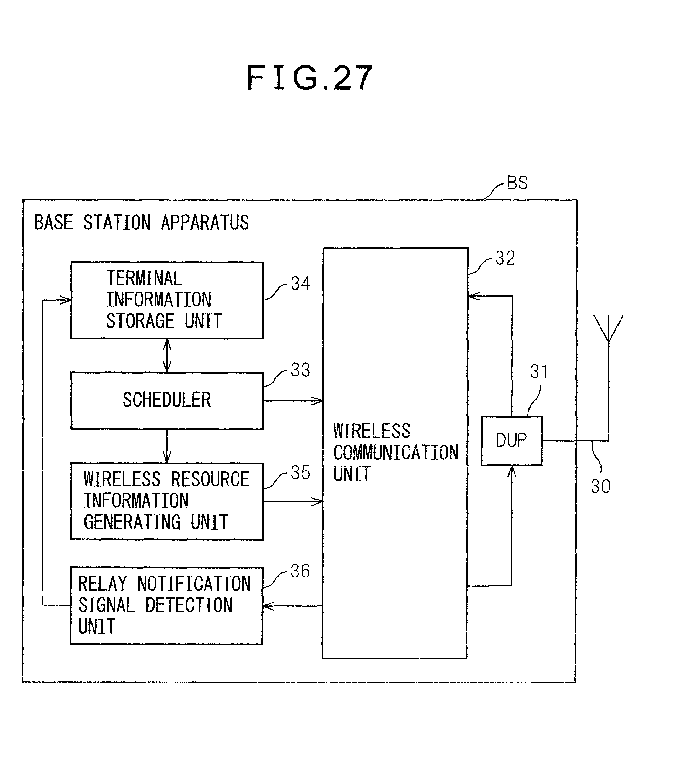

Figure 27 is a diagram illustrating a first configuration example of the base station apparatus BS depicted in Figure 24. Reference numeral 36 designates a relay notification signal detection unit. The base station apparatus BS thus includes the relay notification signal detection unit 36. The same component elements as those of the base station apparatus BS depicted in Figure 10 are designated by the same reference numerals. The relay notification signal detection unit 36 detects the relay notification signal from the signal received from the mobile station apparatus MS.

For each of the mobile station apparatuses MS currently connected to the base station apparatus BS, the terminal information storage unit 34 stores, based on the detection result of the relay notification signal, information indicating whether the mobile station apparatus MS is currently served by the relay apparatus R. The scheduler 33 schedules the wireless resources so that the wireless resources assigned for wireless communications with the mobile station apparatuses MS1 and MS2 not served by the relay apparatus R do not overlap the plurality of wireless resources that the mobile station apparatus MS3 uses within the coverage area of the relay apparatus R.

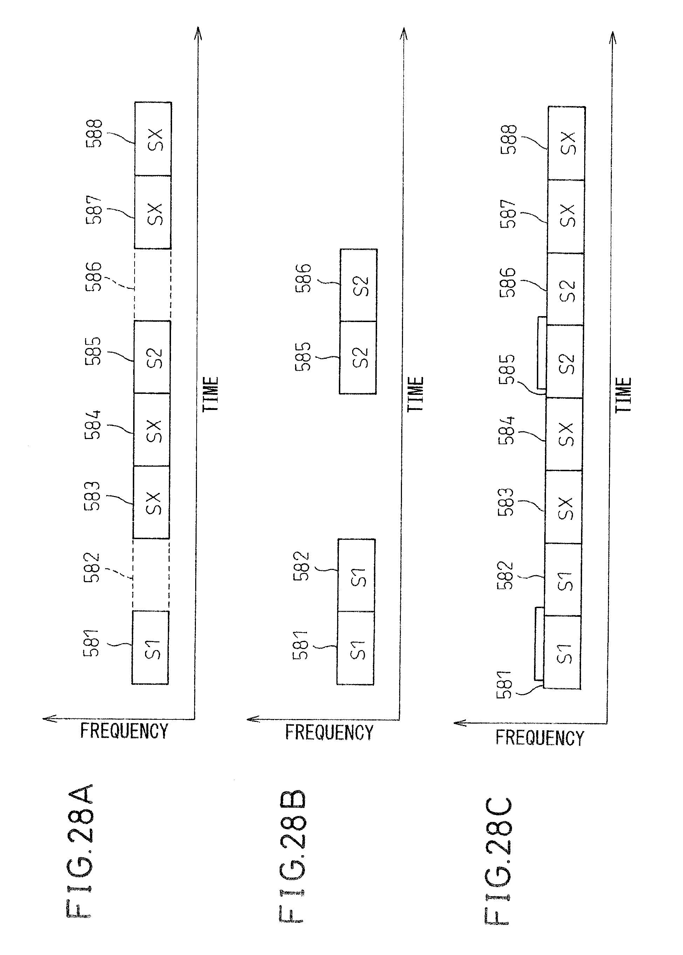

Figures 28A to 28C are explanatory diagrams illustrating a fourth example of the downlink signal for which the wireless resources have been assigned by the base station apparatus BS. Figure 28A depicts the downlink signals transmitted from the base station apparatus BS. Reference numerals 581 to 588 indicate eight successive time slots. The time slots 581 and 585 are assigned to the downlink signals S1 and S2 destined for the mobile station apparatus MS3 served by the relay apparatus R. On the other hand, the time slots 583, 584, 587, and 588 are assigned to the mobile station apparatuses not served by the relay apparatus R.

Figure 28B depicts an example of the downlink signal within the coverage area of the relay apparatus R. The downlink signal S1 is mapped to the time slot 581 and its immediately succeeding time slot 582 in a repetitive manner. The downlink signal S2 is mapped to the time slot 585 and its immediately succeeding time slot 586 in a repetitive manner.

As can be seen form Figures 28A and 28B, the time slots 581, 582, 585, and 586, to which the downlink signals within the coverage area of the relay apparatus R are mapped, are not assigned to the mobile station apparatuses not served by the relay apparatus R. Figure 28C depicts an example of the downlink signal arriving at the mobile station apparatus MS2. As depicted in Figure 28C, the signals of Figure 28A and Figure 28B arrive in a mixed fashion at the mobile station apparatus MS2. However, since the time slots 581, 532, 585, and 586 that the signals within the coverage area of the relay apparatus R use are different from the time slots 583, 584, 587, and 588 assigned to the signals arriving directly from the base station apparatus BS, interference between these signals is reduced.

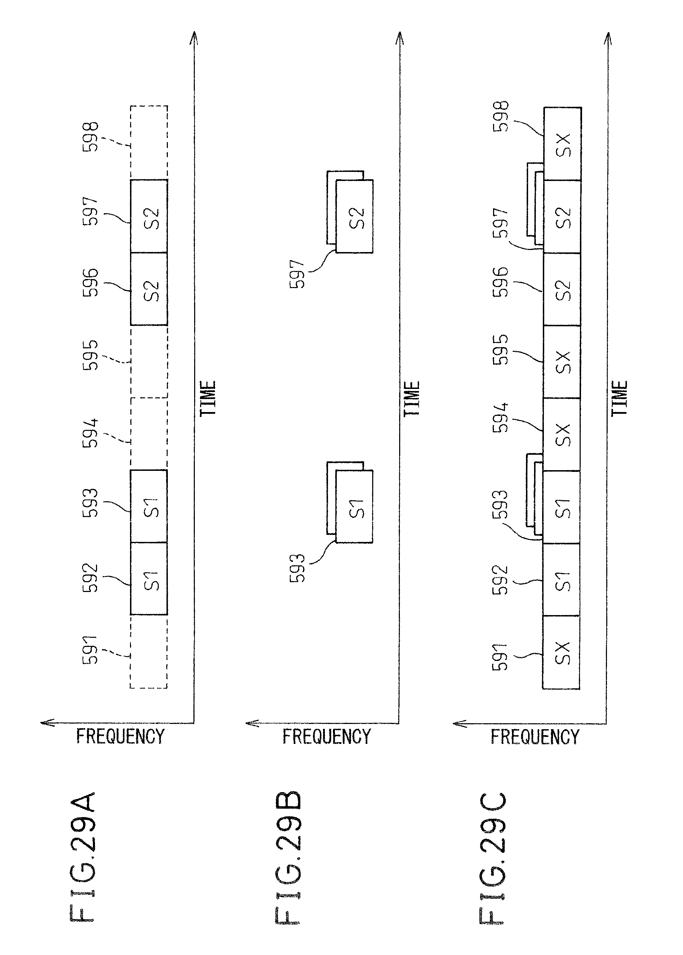

Figures 29A to 29C are explanatory diagrams illustrating a fourth example of the uplink signal for which the wireless resources have been assigned by the base station apparatus BS. Figure 29A depicts an example of the uplink signal within the coverage area of the relay apparatus R. Reference numerals 591 to 598 indicate eight successive time slots. The uplink signal S1 is mapped to the time slot 591 and its immediately succeeding time slot 592 in a repetitive manner. The uplink signal S2 is mapped to the time slot 596 and its immediately succeeding time slot 597 in a repetitive manner.

Figure 29B depicts the uplink signals transmitted from the relay apparatus R. The uplink signal S1 obtained by combining the signals received in the time slots 591 and 592 is transmitted in the time slot 592. The uplink signal S2 obtained by combining the signals received in the time slots 596 and 597 is transmitted in the time slot 597.

Figure 29C depicts the uplink signals received at the base station apparatus BS. The uplink signals within the coverage area of the relay apparatus R (Figure 29A) and the uplink signals transmitted from the mobile station apparatuses not served by the relay apparatus R arrive in a mixed fashion at the base station apparatus BS. Time slots 591, 594, 595, and 598 are assigned to the mobile station apparatuses not served by the relay apparatus R.

However, the time slots 592, 593, 596, and 597 that the signals within the coverage area of the relay apparatus R use are different from the time slots 591, 594, 595, and 598 assigned to the signals arriving directly at the base station apparatus BS from the mobile station apparatuses not served by the relay apparatus R. This serves to reduce the interference between the signals within the coverage area of the relay apparatus R and the signals arriving directly at the base station apparatus BS from the mobile station apparatuses not served by the relay apparatus R.

According to the present embodiment, it is possible to reduce the interference that may occur between the coverage area of the base station apparatus BS and the coverage area of the relay apparatus R when the coverage area of the base station apparatus BS and the coverage area of the relay apparatus R are not separated from each other.

Next, an embodiment of the identification information appending unit 110 depicted in Figure 25 will be described. The identification information appending unit 110 may append the identification information to the relay signal, for example, by superimposing a prescribed pattern on the relay signal. For example, the identification information appending unit 110 may superimpose the prescribed pattern in a frequency band where little effect is caused on the main signal of the relay signal. Further, the identification information appending unit 110 may superimpose the prescribed pattern, for example, by code spreading. In this case, the relay identifying unit 111 depicted in Figure 26 detects the identification information by detecting the prescribed pattern appended to the received signal.

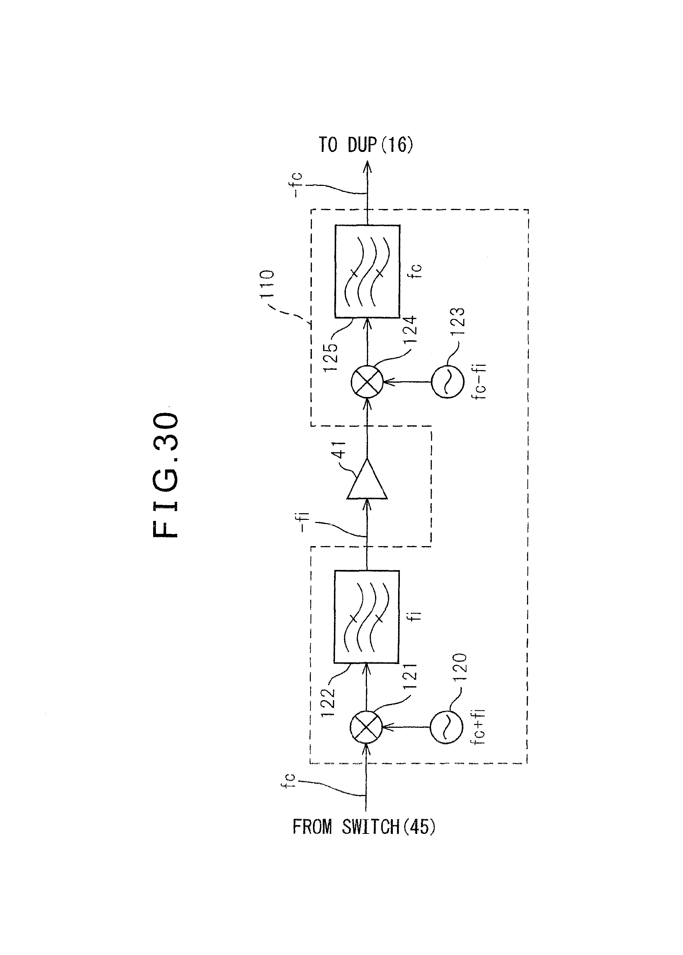

Alternatively, the identification information appending unit 110 may append the identification information to the relay signal, for example, by inverting the sign of the frequency of the relay signal, i.e., by inverting the spectrum of the received signal. Figure 30 is a diagram illustrating a configuration example of the identification information appending unit 110. Reference numeral 41 is the high-power amplifier depicted in Figure 25, 120 and 123 are local oscillators, 121 and 124 are multipliers, and 122 and 125 are band-pass filters.

The carrier frequency of the relay signal received by the relay apparatus R is designated "fc". The identification information appending unit 110 may include a frequency converter for converting the relay signal into a signal containing a frequency component "-fc" which is equal in amplitude but opposite in sign to the carrier frequency fc of the relay signal, and a band-limiting filter for extracting the frequency component fc from the output signal of the frequency converter. In the configuration example of the identification information appending unit 110 depicted in Figure 30, a first mixer formed by the local oscillator 120 and multiplier 121 and a second mixer formed by the local oscillator 123 and multiplier 124 constitute the frequency converter. The configuration illustrated in Figure 30 is only one example of the configuration of the frequency converter, and is not intended to limit the implementation of the identification information appending unit 110 to the mode described hereinafter. Various configurations are possible for the implementation of the frequency converter.

The frequency of the intermediate frequency signal to be amplified by the high-power amplifier 41 is designated "fi". The local oscillator 120 produces a local oscillation signal of frequency "fc+fi". The multiplier 121 converts the relay signal into a signal containing frequency components "-fi" and "2fc+fi" by multiplying the received signal of frequency fc with the local oscillation signal output from the local oscillator 120.

The band-pass filter 122 is tuned to pass the intermediate frequency "fi", so that the band-pass filter 122 extracts the intermediate frequency signal of frequency "-fi" from the output signal of the multiplier 121. The high-power amplifier 41 amplifies the intermediate frequency signal, which is supplied to the multiplier 124.

The local oscillator 123 produces a local oscillation signal of frequency "fc-fi". The multiplier 124 converts the intermediate frequency signal into a signal containing frequency components "-fc" and "fc-2fi" by multiplying the intermediate frequency signal of frequency "-fi" with the local oscillation signal output from the local oscillator 123.

The band-pass filter 125 is tuned to pass the carrier frequency "fc", so that the band-pass filter 125 extracts the carrier signal of frequency "-fc" from the output signal of the multiplier 124. In this way, the identification information appending unit 110 inverts the sign of the frequency of the received signal.

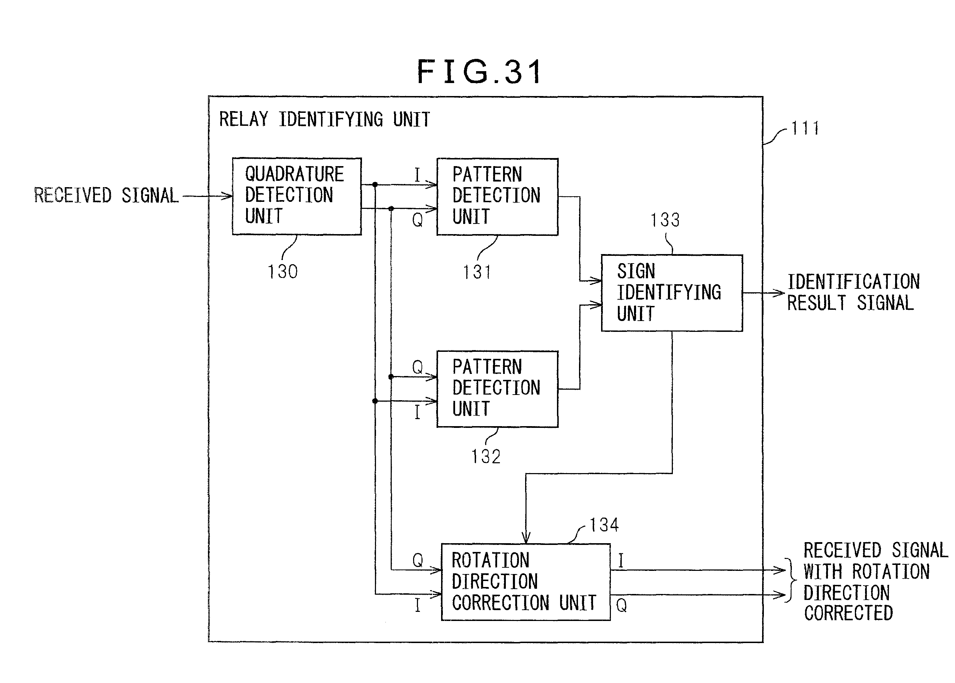

Figure 31 is a diagram illustrating a first configuration example of the relay identifying unit 111. The relay identifying unit 111 identifies whether the received signal is one that has been relayed by the relay apparatus R, by checking whether the sign of the frequency of the received signal has been inverted by the identification information appending unit 110 depicted in Figure 30. Reference numeral 130 is a quadrature detection unit, 131 and 132 are pattern detection units, 133 is a sign identifying unit, and 134 is a rotation direction correction unit. The relay identifying unit 111 thus includes the quadrature detection unit 130, the pattern detection units 131 and 132, the sign identifying unit 133, and the rotation direction correction unit 134.

The quadrature detection unit 130 applies quadrature detection to the received signal to produce an in-phase component signal (I-component signal) and a quadrature component signal (Q-component signal). The pattern detection unit 131 calculates correlation between the prescribed pattern known to be contained in the received signal and the symbol pattern at a signal point corresponding to the in-phase and quadrature component signals output from the quadrature detection unit 130. The pattern detection unit 131 may use, for example, a pilot signal or a reference signal as the known pattern.

On the other hand, the pattern detection unit 132 calculates correlation between the prescribed pattern and the symbol pattern corresponding to the signals obtained by reversing the phase rotation directions of the in-phase and quadrature component signals output from the quadrature detection unit 130.

Based on the correlations calculated by the pattern detection units 131 and 132, the sign identifying unit 133 identifies whether the sign of the carrier frequency of the signal received by the wireless communication apparatus X has been inverted or not, that is, whether the received signal is one that has been relayed by the relay apparatus.

If the correlation calculated by the pattern detection unit 131 is higher than the correlation calculated by the pattern detection unit 132, the sign identifying unit 133 identifies that the sign of the carrier frequency of the received signal has not been inverted. If the correlation calculated by the pattern detection unit 131 is lower than the correlation calculated by the pattern detection unit 132, the sign identifying unit 133 identifies that the sign of the carrier frequency of the received signal has been inverted. The sign identifying unit 133 outputs an identification result signal indicating whether the received signal is one that has been relayed by the relay apparatus.

In accordance with the identification result from the sign identifying unit 133, the rotation direction correction unit 134 corrects the phase rotation directions of the in-phase and quadrature component signals output from the quadrature detection unit 130.

If the sign of the carrier frequency of the received signal has not been inverted, the rotation direction correction unit 134 passes the in-phase and quadrature component signals output from the quadrature detection unit 130 directly to the reception processing unit 26 that follows.

If the sign of the carrier frequency of the received signal has been inverted, the rotation direction correction unit 134 reverses the phase rotation directions of the in-phase and quadrature component signals output from the quadrature detection unit 130, and supplies the thus corrected signals to the reception processing unit 26 that follows. The rotation direction correction unit 134 may reverse the phase rotation directions of the in-phase and quadrature component signals, for example, by interchanging the in-phase and quadrature components of the in-phase and quadrature component signals input to it. Alternatively, the rotation direction correction unit 134 may reverse the phase rotation directions of the in-phase and quadrature component signals, for example, by inverting one or the other of the values of the in-phase and quadrature component signals input to it.

According to the present embodiment, the information identifying whether the signal is one that has been relayed by the relay apparatus can be appended to the relay signal by inverting or not inverting the sign of the carrier frequency of the relay signal. The wireless resource of the wireless signal is not consumed if the sign of the carrier frequency is inverted.

In the configuration examples described with reference to Figures 25 to 27, the identification information appending unit 110 in the relay apparatus R has been described as appending the identification information to the downlink signal. Alternatively, the identification information appending unit 110 in the relay apparatus R may append the identification information to the uplink signal. The base station apparatus BS may identify whether or not the mobile station apparatus MS is currently served by the relay apparatus R, by checking whether identification information is appended to the uplink signal received from the mobile station apparatus MS.

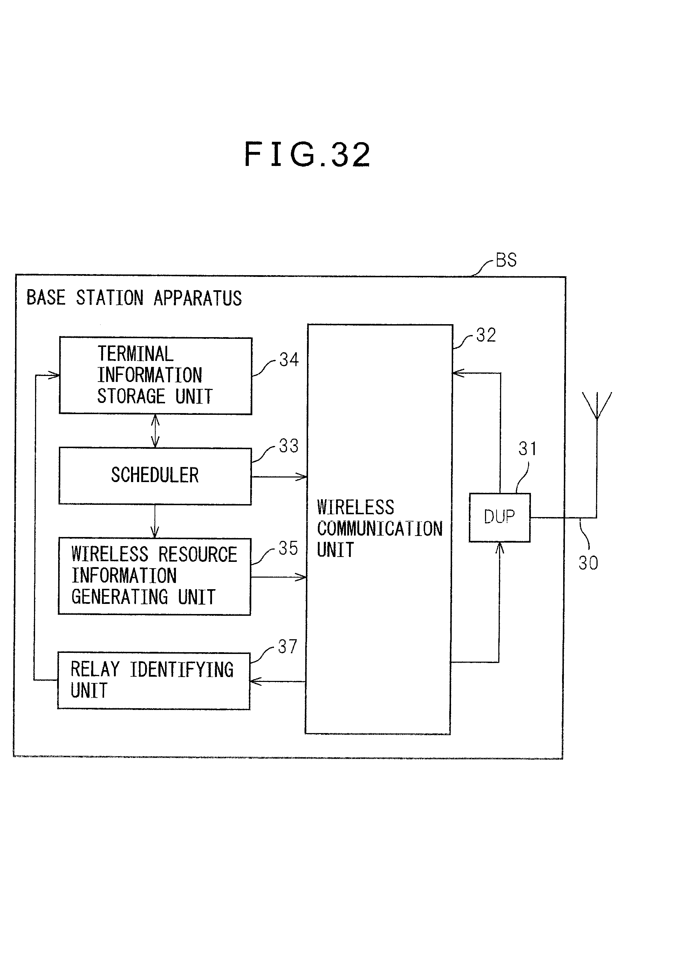

Figure 32 is a diagram illustrating a second configuration example of the base station apparatus BS depicted in Figure 24. Reference numeral 37 designates a relay identifying unit. The base station apparatus BS thus includes the relay identifying unit 37. The same component elements as those of the base station apparatus BS depicted in Figure 10 are designated by the same reference numerals. The relay identifying unit 37 detects identification information from the uplink signal received from the mobile station apparatus MS and identifies whether or not the mobile station apparatus MS is currently served by the relay apparatus R. The relay identifying unit 37 may be identical in configuration to the earlier described relay identifying unit 111.

The identification result from the relay identifying unit 37 is stored in the terminal information storage unit 34. The scheduler 33 schedules the wireless resources so that the wireless resources assigned for wireless communications with the mobile station apparatuses MS1 and MS2 not served by the relay apparatus R do not overlap the plurality of wireless resources that the mobile station apparatus MS3 uses within the coverage area of the relay apparatus R.

According to the present embodiment, by appending the identification information to the uplink signal, it is possible to identify at the base station apparatus BS whether or not the mobile station apparatus MS is currently served by the relay apparatus R. Based on the identification result, the base station apparatus BS can assign the wireless resources to the mobile station apparatus MS in such a manner as to reduce the interference that may occur between the coverage area of the base station apparatus BS and the coverage area of the relay apparatus R.

The description given above with reference to Figures 24 to 32 has dealt with an embodiment implemented in a wireless communication system employing a time division multiple access scheme. It will also be noted that in a wireless communication system employing a frequency division multiple access scheme, wireless resources other than the plurality of wireless resources used within the coverage area of the relay apparatus can be assigned in like manner to wireless communications with the mobile station apparatuses not served by the relay apparatus.

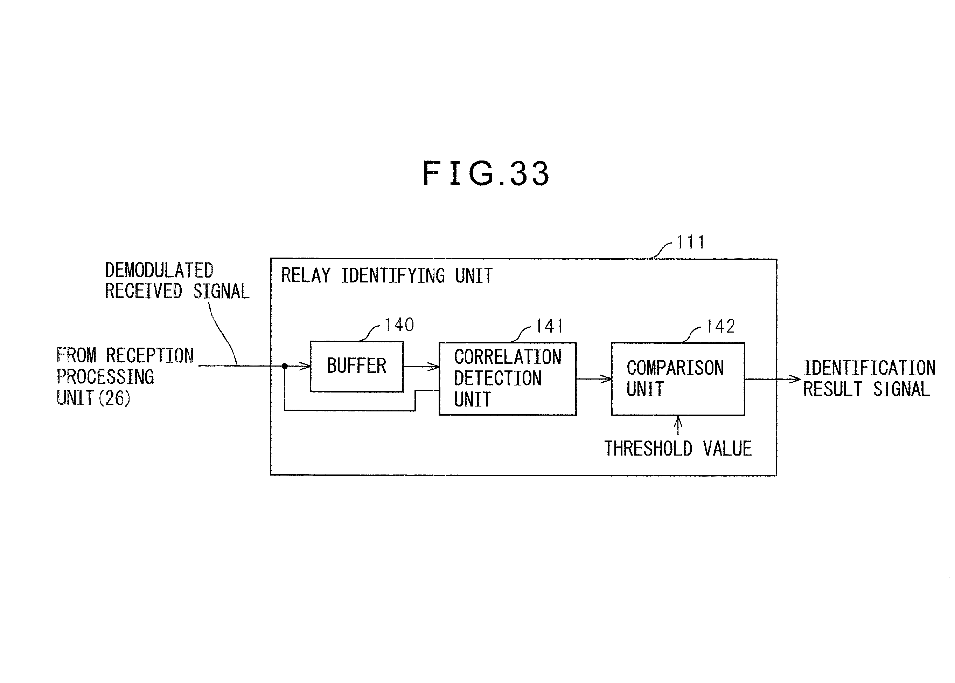

Next, a description will be given of an alternative embodiment for identifying, at the mobile station apparatus having the configuration of Figure 26, whether or not the received signal is one that has been relayed by the relay apparatus R. Figure 33 is a diagram illustrating a second configuration example of the relay identifying unit 111. The relay identifying unit 111 calculates correlation between the signals transmitted using a plurality of wireless resources. The relay identifying unit 111 may be configured to calculate correlation between the signals transmitted using a plurality of time slots or to detect correlation between the signals transmitted using a plurality of frequency bands.

When the relay apparatus R is repetitively transmitting identical signals on a plurality of wireless resources within the coverage area of the relay apparatus R, if correlation between the repetitively transmitted signals is calculated, the correlation will yield a large value. The relay identifying unit 111 may calculate, for example, correlation between the pilot signals repetitively transmitted on a plurality of wireless resources. If the calculated correlation is not smaller than a predetermined threshold value, it is determined that the received signal is one that has been relayed by the relay apparatus R. If the calculated correlation is smaller than the predetermined threshold value, it is determined that the received signal has arrived directly from the base station apparatus BS.

Reference numeral 140 is a buffer, 141 is a correlation detection unit, and 142 is a comparison unit. The relay identifying unit 111 thus includes the buffer 140, the correlation detection unit 141, and the comparison unit 142.

The buffer 140 stores a pilot signal received in a given time slot. The correlation detection unit 141 calculates correlation between the pilot signal received in some other time slot and the pilot signal stored in the buffer 140. The comparison unit 142 compares the calculated correlation value with the predetermined threshold value, to identify whether or not the received signal is one that has been relayed by the relay apparatus R.

The configuration depicted in Figure 33 represents an embodiment for use in a communication system employing a time division multiple access scheme. In a communication system employing a frequency division multiple access scheme, the correlation detection unit 141 may detect correlation between the pilot signals transmitted in different frequency bands.

In this embodiment also, the mobile station apparatus MS can identify whether the received signal is one that has been relayed by the relay apparatus.

Next, a description will be given of the operation of the base station apparatus BS when the mobile station apparatus MS moves from the coverage area of the base station apparatus BS to the coverage area of the relay apparatus R or from the coverage area of the relay apparatus R to the coverage area of the base station apparatus BS.

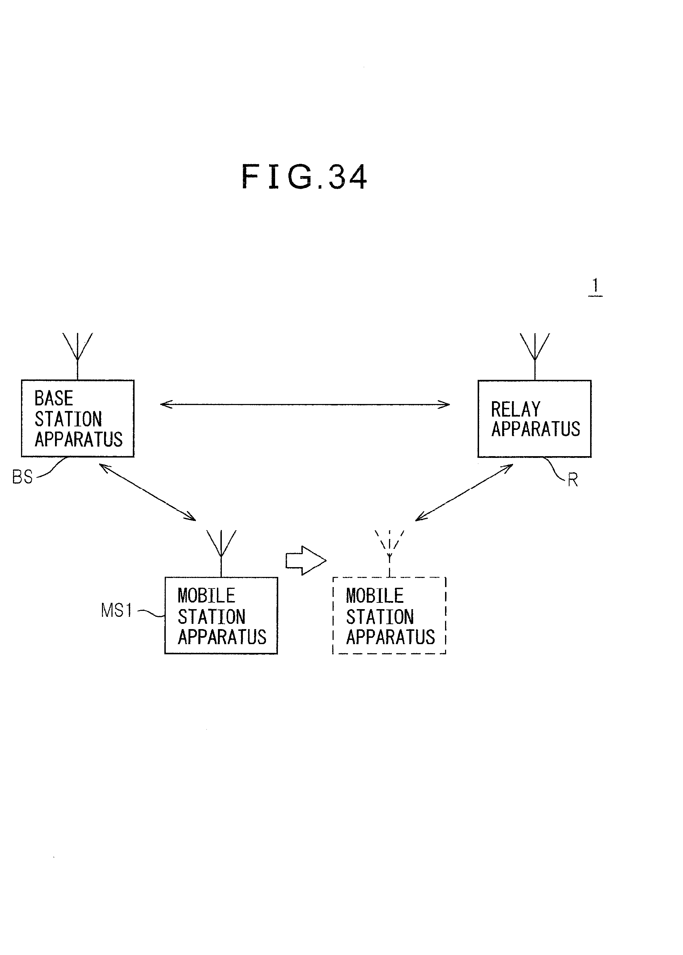

Figure 34 is a diagram illustrating the configuration of a fourth embodiment implemented in a wireless communication system. The same component elements as those of the wireless communication system 1 depicted in Figure 1 are designated by the same reference numerals. The configuration of the base station apparatus BS may be the same as that depicted in Figure 27 or 32. Suppose here that the mobile station apparatus MS1 moves from the coverage area of the base station apparatus BS to the coverage area of the relay apparatus R or from the coverage area of the relay apparatus R to the coverage area of the base station apparatus BS.

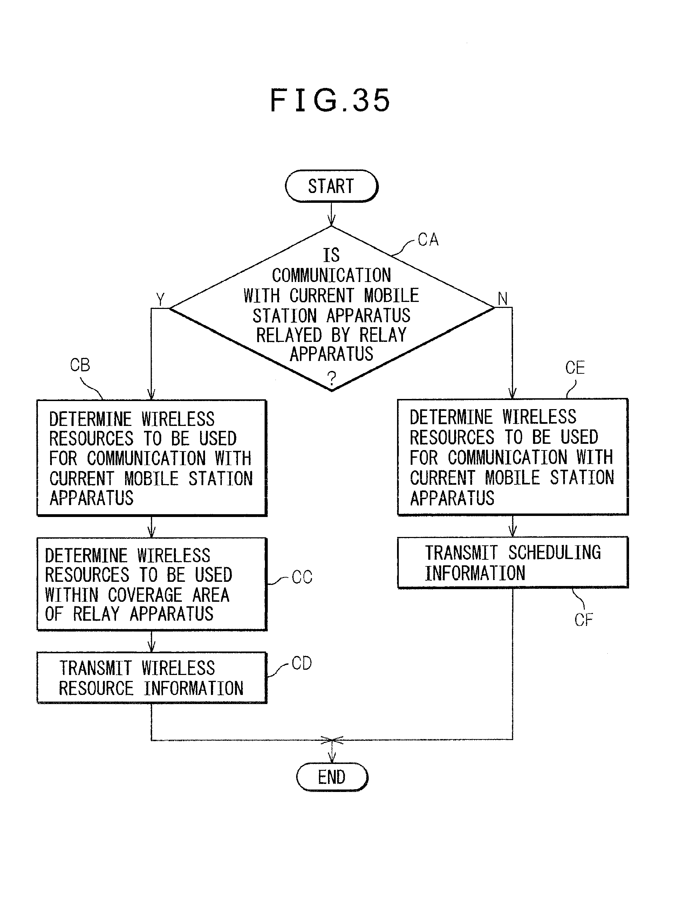

Figure 35 is an explanatory diagram illustrating the scheduling process performed at the base station apparatus BS depicted in Figure 34. In an alternative embodiment, the following operations CA to CF may be implemented as steps.

In operation CA, the relay notification signal detection unit 36 or relay identifying unit 37 in the base station apparatus BS determines whether or not the mobile station apparatus MS1 is currently served by the relay apparatus R. The determination as to whether or not the mobile station apparatus MS1 is currently served by the relay apparatus R may be made in the same manner as described above with reference to Figures 24 to 33. If the mobile station apparatus MS1 is currently served by the relay apparatus R (Y in operation CA), the process proceeds to operation CB. If the mobile station apparatus MS1 is not served by the relay apparatus R (N in operation CA), the process proceeds to operation CE.

In operation CB, the scheduler 33 determines the wireless resources to be used for wireless communication between the base station apparatus BS and the mobile station apparatus MS1. In operation CC, the scheduler 33 determines the plurality of wireless resources to which the relay signal to be transmitted to or received from the mobile station apparatus MS1 is to be mapped in a repetitive manner within the coverage area of the relay apparatus R.

In operation CD, the wireless communication unit 32 transmits the scheduling information specifying the wireless resources determined in operation CB and the wireless resource information specifying the wireless resources determined in operation CC to the mobile station apparatus MS1 and the relay apparatus R. Here, if the relationship between the wireless resources determined in operation CB and the wireless resources determined in operation CC is predetermined, the scheduling information concerning the wireless resources determined in operation CB need not necessarily be transmitted. After operation CD, the process is terminated.

In operation CE, the scheduler 33 determines the wireless resources to be used for wireless communication between the base station apparatus BS and the mobile station apparatus MS1. For example, the scheduler 33 may assign to the mobile station apparatus MS1 the wireless resources that are different from the wireless resources that other mobile station apparatus served by the relay apparatus R use within the coverage area of the relay apparatus R.

In operation CF, the wireless communication unit 32 transmits the scheduling information specifying the wireless resources determined in operation CE to the mobile station apparatus MS1.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. A wireless signal relay method comprising:
receiving a wireless signal transmitted by mapping a first signal to be relayed (S1, S2) in a repetitive manner to a plurality of wireless resources (521 to 524);
generating a combined signal by combining signals repetitively mapped as said first signal to be relayed; and
transmitting said combined signal.

2. The relay method as claimed in claim 1, further comprising disabling signal output on any one of said plurality of wireless resources (521, 523) other than the wireless resource (522, 524) used to transmit said combined signal.

3. The relay method as claimed in claim 1 or 2, further comprising:
receiving a wireless signal as a second signal to be relayed (S1, S2);
mapping said second signal to be relayed to a plurality of wireless resources (501 to 504) in a repetitive manner; and
transmitting said second signal to be relayed (S1, S2) mapped to said plurality of wireless resources (501 to 504).

4. A relay apparatus (R) comprising:
a first receiving unit (16, 17) which receives a wireless signal;
a combining unit (18) which generates a combined signal by combining signal repetitively mapped as a first signal to be relayed to a plurality of wireless resources and received by said first receiving unit (16, 17); and
a first transmitting unit (10, 11) which transmits said combined signal.

5. The relay apparatus (R) as claimed in claim 4, further comprising a disabling unit (19) which disables signal output from said first transmitting unit (10, 11) on any one of said plurality of wireless resources other than the wireless resource used to transmit said combined signal.

6. The relay apparatus (R) as claimed in claim 4 or 5, further comprising:
a second receiving unit (10, 11) which receives a wireless signal as a second signal to be relayed;
a first mapping unit (15) which maps said second signal to be relayed to a plurality of wireless resources in a repetitive manner; and
a second transmitting unit (16, 17) which transmits said second signal to be relayed mapped to said plurality of wireless resources.

7. The relay apparatus (R) as claimed in claim 4 or 5, further comprising a relay signal detection unit (46, 47, 92) which detects said first signal to be relayed by multiplying each of wireless signals mapped to said plurality of wireless resources with a corresponding one of bits contained in an orthogonal code unique to said relay apparatus (R).

8. The relay apparatus (R) as claimed in claim 6, further comprising an orthogonal code multiplying unit (91) which multiplies each of signals, repetitively mapped as said second signal to be relayed to said plurality of wireless resources, with a corresponding one of bits contained in an orthogonal code unique to said relay apparatus (R).

9. The relay apparatus (R) as claimed in claim 4 or 5, wherein said plurality of wireless resources to which said first signal to be relayed is mapped in a repetitive manner is a plurality of time slots, and wherein said relay apparatus (R) further comprises an interleaved frequency division multiple access (IFDMA) demodulation unit (102) which detects said first signal to be relayed by performing interleaved frequency division multiple access demodulation in which each of wireless signals mapped to said plurality of time slots is multiplied with a phase rotation unique to said relay apparatus (R).

10. The relay apparatus (R) as claimed in claim 6, wherein said first mapping unit (15) maps said second signal to be relayed in a repetitive manner to said plurality of wireless resources provided as a plurality of time slots, and wherein said relay apparatus (R) further comprises an interleaved frequency division multiple access demodulation unit (101) which performs interleaved frequency division multiple access demodulation in which each of signals repetitively mapped as said second signal to be relayed to said plurality of time slots is multiplied with a phase rotation unique to said relay apparatus (R).

11. The relay apparatus as claimed in any one of claims 6 to 10, further comprising an inverting unit (120 to 125) which inverts the sign of the frequency of said wireless signal to be transmitted from at least one of said first and second transmitting unit (10, 11, 16, 17).

12. A mobile station apparatus (MS) which receives the wireless signal relayed by the relay apparatus (R) claimed in claim 6, comprising:
a third receiving unit (20, 21) which receives said wireless signal; and
a combining unit (25) which combines signals repetitively mapped as said second signal to be relayed to said plurality of wireless resources and received by said third receiving unit (20, 21).

13. A mobile station apparatus (MS) claimed in claim 12, comprising:
an identifying unit (111) which identifies whether or not the wireless signal received by said third receiving unit (20, 21) is one that has been relayed by said relay apparatus (R); and
an identification result reporting unit (112) which reports an identification result, supplied from said identifying unit (111), to a base station apparatus (BS) to which said mobile station apparatus (MS) is connected.

14. A base station apparatus (BS) whose wireless communication with a mobile station apparatus (MS) is relayed by the relay apparatus (R) claimed in any one of claims 4 to 11, comprising:
a scheduler (33) which determines assignment of a wireless resource to which a wireless signal to be transmitted between said mobile station apparatus (MS) and said base station apparatus (BS) is to be mapped and assignment of said plurality of wireless resources to which the wireless signal to be transmitted between said relay apparatus (R) and said mobile station apparatus (MS) is to be mapped in a repetitive manner;
an identifying unit (36, 37) which identifies whether or not the wireless signal to be transmitted between said mobile station apparatus (MS) and said base station apparatus (BS) is relayed by said relay apparatus (R); and
a wireless resource reporting unit (35) which reports said determined assignment of said plurality of wireless resources to said relay apparatus (R) and said mobile station apparatus (MS), and wherein
said scheduler (33) assigns wireless resources other than said plurality of wireless resources to wireless communication with mobile station apparatus (MS) not served by said relay apparatus.
